(19) Europäisches Patentamt / European Patent Office / Office européen des brevets

(11) **EP 4 394 177 B1**

(12) **EUROPÄISCHE PATENTSCHRIFT**

(45) Veröffentlichungstag und Bekanntmachung des Hinweises auf die Patenterteilung:
**16.07.2025   Patentblatt 2025/29**

(21) Anmeldenummer: **22217229.8**

(22) Anmeldetag: **29.12.2022**

(51) Internationale Patentklassifikation (IPC):
*F03D 7/02* *(2006.01)*

(52) Gemeinsame Patentklassifikation (CPC):
**F03D 7/0276; F03D 7/0224; F03D 7/0284;**
Y02E 10/72

(54) **VERFAHREN ZUM STEUERN EINER WINDENERGIEANLAGE**

METHOD FOR CONTROLLING A WIND TURBINE

PROCÉDÉ DE COMMANDE D'UNE ÉOLIENNE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**03.07.2024   Patentblatt 2024/27**

(73) Patentinhaber: **Wobben Properties GmbH 26607 Aurich (DE)**

(72) Erfinder:
• **von Aswege, Enno 26629 Großefehn (DE)**
• **Schaper, Ulf 27254 Staffhorst (DE)**
• **Mühlenbrock, Henry 26759 Hinte (DE)**

(74) Vertreter: **Eisenführ Speiser Patentanwälte Rechtsanwälte PartGmbB Postfach 10 60 78 28060 Bremen (DE)**

(56) Entgegenhaltungen:
DE-A1- 102019 105 296     US-A1- 2010 283 247

• ANDREAS S?NDERGAARD PEDERSEN ET AL: "Safe Operation and Emergency Shutdown of Wind Turbines", 31 May 2012 (2012-05-31), Aalborg, Denmark, XP055149694, Retrieved from the Internet <URL:http://projekter.aau.dk/projekter/files/63418071/thesis.pdf> [retrieved on 20141029]

**Beschreibung**

Die vorliegende Erfindung betrifft ein Verfahren zum Steuern einer Windenergieanlage und die vorliegende Erfindung betrifft eine entsprechende Windenergieanlage.

Windenergieanlagen sind bekannt, sie erzeugen elektrische Leistung aus Wind. Dazu wird ein aerodynamischer Rotor vom Wind angetrieben, um sich mit einer angemessenen Rotordrehzahl zu drehen und dadurch den Generator der Windenergieanlage zu drehen, so dass dieser Leistung abgeben kann. Die Windenergieanlage wird dabei in einem Betriebspunkt betrieben, der insbesondere von der Windgeschwindigkeit abhängt und durch die Rotordrehzahl und die abgegebene Leistung gekennzeichnet ist.

Solche Betriebspunkte sind meistens und im Wesentlichen stationäre Betriebspunkte, in denen nämlich die Generatordrehzahl und die abgegebene Leistung im Wesentlichen konstant sind. Üblicherweise werden solche Betriebspunkte durch eine Drehzahl-Leistungskennlinie im Wesentlichen vorgegeben. Eine solche Drehzahl-Leistungskennlinie gibt zu Drehzahlwerten, nämlich der Rotordrehzahl, Leistungswerte vor, also von der Windenergieanlage bzw. dem Generator abzugebende Leistung.

Das Regelungsprinzip einer solchen Drehzahl-Leistungskennlinie arbeitet so, dass eine Drehzahl erfasst und die dazu zugehörige Leistung gemäß der Drehzahl-Leistungskennlinie eingestellt wird. Erhöht sich nun - um ein anschauliches Beispiel zu erläutern - die Windgeschwindigkeit, erhöht sich dadurch die Drehzahl, so dass gemäß der Drehzahl-Leistungskennlinie eine höhere Leistung eingestellt wird. Durch die höher eingestellte Leistung wird der Beschleunigung aufgrund der Erhöhung der Windgeschwindigkeit entgegengewirkt. Die Leistung wird dabei gemäß der Drehzahl-Leistungskennlinie solange weiter erhöht, bis sich die Drehzahl nicht weiter erhöht, wodurch ein stabiler Arbeitspunkt gefunden wird.

Insoweit stellen diese Betriebspunkte stationäre und damit auch stabile Betriebspunkte dar, in denen die Windenergieanlage gut betrieben werden kann.

Erhöht sich die Windgeschwindigkeit aber über eine Nennwindgeschwindigkeit, so erreicht die Rotordrehzahl den Wert ihrer Nenndrehzahl und die Abgabeleistung den Wert ihrer Nennleistung. Die Drehzahl soll sich dann also nicht weiter erhöhen, die Abgabeleistung ebenfalls nicht. Einem weiteren Erhöhen der Drehzahl kann dann durch Verstellen der Rotorblätter in ihrem Blattwinkel und damit im Ergebnis ihrem Anstellwinkel entgegengewirkt werden. Die Rotorblätter werden dann also nach und nach, je nach Höhe der Windgeschwindigkeit, aus dem Wind gedreht. Ihr Blattwinkel nimmt also zu. Dieser Bereich, bei dem die Windgeschwindigkeit so hoch ist, dass durch Verstellen der Rotorblätter ein Erhöhen der Drehzahl und Leistung verhindert werden muss, um die Windenergieanlage dann entsprechend mit Nenndrehzahl und Nennleistung zu betreiben, wird auch als Volllastbereich oder Volllastbetrieb bezeichnet. Auch im Volllastbetrieb arbeitet die Windenergieanlage im Wesentlichen mit stationären und damit stabilen Betriebspunkten. Leichte Schwankungen in der Windgeschwindigkeit können natürlich zu leichten Schwankungen des Betriebspunktes führen.

Im Teillastbetrieb, wenn die Windgeschwindigkeit also noch nicht Nennwindgeschwindigkeit erreicht hat, ist der Blattwinkel meist konstant, er liegt insbesondere im Bereich von 0 bis 10, insbesondere etwa 2 bis 7 Grad. Die Windenergieanlage ist dabei so ausgelegt, dass im Teillastbetrieb die Betriebspunkte zu einem aerodynamisch optimalen Betrieb führen. Insbesondere liegt hier zumindest in einem Kernbereich häufig eine konstante Schnelllaufzahl zugrunde. Diese Auslegung der Windenergieanlage wird durch die Drehzahl-Leistungskennlinie in der Windenergieanlage realisiert.

Es kann nun aber in Betracht kommen, dass von diesen Betriebspunkten, insbesondere den aerodynamisch optimalen Betriebspunkten, aber auch den Betriebspunkten im Volllastbetrieb, durch eine externe Vorgabe abgewichen werden muss. Eine solche externe Vorgabe kann die Vorgabe eines neuen, nämlich insbesondere reduzierten Drehzahlwertes für die Rotordrehzahl sein, aber auch (alternativ oder ergänzend) die Vorgabe eines insbesondere reduzierten Leistungswertes für die Abgabeleistung.

Grundsätzlich können sowohl für die Drehzahl als auch für die Leistung auch erhöhte Werte vorgegeben werden, meist arbeitet eine Windenergieanlage aber in einem Betrieb, in dem sowohl Drehzahl als auch Leistung bereits so hoch wie möglich und/oder so hoch wie sinnvoll und/oder optimal sind. Wird aber die Windenergieanlage aktuell bereits in einem reduzierten Betriebspunkt betrieben, also mit niedrigerer Drehzahl und/oder niedrigerer Leistung als möglich und/oder sinnvoll wäre, kommt besonders dann auch die Vorgabe einer höheren Drehzahl und/oder einer höheren Leistung in Betracht.

Eine solche Veränderung des Betriebspunktes durch künstliche Vorgaben, stellt meist eine Störung dar und kann die Anlage belasten. Besonders sprungartige Veränderungen können zu einer hohen, besonders mechanischen Belastung der Windenergieanlage führen. Unter anderem können durch eine solche Veränderung des Betriebspunktes mechanische Schwingungen ausgelöst und im ungünstigsten Fall sogar verstärkt werden. Besonders Turmschwingungen können hier relevant sein.

Solche Turmschwingungen können besonders dadurch ausgelöst werden, dass durch Veränderung des Betriebspunktes die Schubbelastung durch den Wind auf den aerodynamischen Rotor der Windenergieanlage sich verändert, wodurch eine Auslenkung des Turms im Bereich des aerodynamischen Rotors, also am Turmkopf, verändert wird. Anschaulich besprochen kann der Turmkopf also zurückschwingen, was zu einer Belastung des Turmes und damit der Windenergieanlage insgesamt führen kann.

Solchen Schwingungen kann regelmäßig durch entsprechend sanftes Verändern des Betriebspunktes begegnet werden bzw. sie können dadurch vermieden werden. Häufig ist es aber so, dass geänderte Betriebsvorgaben oftmals so schnell wie möglich umgesetzt werden sollten. Oftmals sind solche veränderten Betriebsvorgaben mit Sicherheits- oder anderen Stabilitätsüberlegungen verknüpft. Eine Drehzahlverringerung kann beispielsweise vorgesehen sein, wenn sich der Windenergieanlage ein Vogel einer gefährdeten Art nähert.

Eine Leistungsreduzierung kann eine Anforderung des elektrischen Versorgungsnetzes sein und daher für die Stabilität des elektrischen Versorgungsnetzes wichtig sein. Beispielsweise kann im Fall eines unerwarteten Lastabwurfs im elektrischen Versorgungsnetz eine schnelle Leistungsreduzierung notwendig sein. Auch ein Notstopp einer Windenergieanlage kann der Grund für die Vorgabe eines veränderten Betriebspunktes sein.

In all diesen Fällen, die nur Beispiele darstellen, ist somit eine nur langsame Veränderung des Betriebspunktes unerwünscht, vielleicht sogar ausgeschlossen.

Während des Patenterteilungsverfahrens wurden u.a. folgende Dokumente betrachtet:

DE 10 2019 105296 A1,

Andreas Søndergaard Pedersen ET AL: "Safe Operation and Emergency Shutdown of Wind Turbines", 2012-05-31, XP055149694, und

US 2010/283247 A1.

Der vorliegenden Erfindung liegt somit die Aufgabe zugrunde, zumindest eines der genannten Probleme zu adressieren. Insbesondere soll eine Lösung vorgeschlagen werden, die eine schnelle Veränderung eines Betriebspunktes, also insbesondere eine schnelle Drehzahl und/oder Leistungsreduzierung, realisiert, während gleichzeitig Belastungen der Windenergieanlage, insbesondere mechanische Belastungen des Turmes, geringgehalten werden. Zumindest soll zu bisher bekannten Lösungen eine Alternative vorgeschlagen werden.

Erfindungsgemäß wird ein Verfahren gemäß Anspruch 1 vorgeschlagen. Das Verfahren betrifft somit das Steuern einer an ein elektrisches Versorgungsnetz angeschlossenen Windenergieanlage, die einen Rotor mit in ihrem Blattwinkel verstellbaren Rotorblättern aufweist, mit einer variablen Drehzahl betreibbar ist und zum Erzeugen einer Anlagenleistung aus Wind vorbereitet ist. Der Rotor kann auch als aerodynamischer Rotor bezeichnet werden, er wird über seine Rotorblätter aus dem Wind angetrieben. Die Drehzahl des Rotors, also die Rotordrehzahl, ist variabel. Sie kann besonders durch eine entsprechende Betriebssteuerung verändert werden, hängt aber auch vom Wind ab. Die Anlagenleistung ist die von der Windenergieanlage erzeugte und abgegebene Leistung. Es kann alternativ auch die vom Generator abgegebenen Leistung betrachtet werden. Zwischen der vom Generator abgegebenen Leistung und der letztlich von der Windenergieanlage abgegebenen Anlagenleistung können zwar Unterschiede sein, auf die kommt es für die vorliegende Erfindung aber nicht an.

Zum Verstellen der Blattwinkel ist eine Blattwinkelsteuerung vorgesehen, die das Verstellen der Blattwinkel steuert. Unter anderem kann dafür jeweils ein entsprechendes Stellsignal an einen Aktuator gegeben werden, damit entsprechende Verstellmotoren, die auch als Pitchantriebe bezeichnet werden, das Blatt in ihrem Blattwinkel verstellen. Grundsätzlich kann die Blattwinkelsteuerung ganz oder teilweise für alle Rotorblätter zugleich vorgesehen sein, besonders in dem Fall, dass die Rotorblätter nicht individuell verstellt werden, kann die Blattwinkelsteuerung jeweils drei gleiche Sollwerte ausgeben, nämlich einen je Verstellantrieb eines Rotorblattes, wenn der Rotor drei Rotorblätter hat.

Jegliche Ausführungen zu der Blattwinkelsteuerung können auch so zu verstehen sein, dass dies bei jedem Rotorblatt einzeln und dabei identisch erfolgt. Wird also beispielsweise der Blattwinkelsteuerung ein bestimmter Blattwinkel vorgegeben, so wird dieser für jedes Rotorblatt vorgegeben.

Zum Regeln oder Begrenzen der Drehzahl ist eine Drehzahlregelung vorgesehen. Diese Drehzahlregelung kann ebenfalls Sollwerte verarbeiten und entsprechende Steuerelemente und/oder Aktuatoren ansteuern bzw. für diese Ansteuerwerte vorgeben.

Zum Begrenzen der Anlagenleistung ist eine Leistungsregelung vorgesehen. Die Leistungsregelung setzt einen Leistungssollwert in eine Leistungsabgabe um. Sie wirkt meist begrenzend, da naturgemäß die Abgabenleistung nicht über die aus dem Wind verfügbare Leistung erhöht werden kann. Die Leistungsregelung kann an einem in das elektrische Versorgungsnetz einspeisenden Wechselrichter wirksam werden bzw. dort angreifen, und/oder an einem aktiven Gleichrichter, der den Generator, insbesondere den Generatorstrom steuert.

Weiterhin arbeitet das Verfahren so, dass die Windenergieanlage in einem vorgebbaren Arbeitspunkt betreibbar ist, wobei der Arbeitspunkt wenigstens durch die Drehzahl, also die Rotordrehzahl, und die Anlagenleistung, also insbesondere die Generatorleistung oder Abgabeleistung, gekennzeichnet ist. Im Teillastbetrieb kann das besonders der Arbeitspunkt sein, der sich aufgrund einer vorgegebenen Drehzahl-Leistungskennlinie ergibt. Im Volllastbetrieb wird der Arbeitspunkt durch Nenndrehzahl und Nennleistung gekennzeichnet sein. Auch im Volllastbetrieb ist der Arbeitspunkt somit dadurch vorgebbar, dass Drehzahl und/oder Leistung gegenüber Nenndrehzahl bzw. Nennleistung reduziert sein können. Im Ausnahmefall kommt aber auch in Betracht, dass Drehzahl und/oder Leistung höher als Nenndrehzahl bzw. Nennleistung sind, zumindest etwas und/oder temporär.

Ein Schritt des Verfahrens ist das Betreiben der Windenergieanlage in ersten Arbeitspunkt, der hier auch synonym als Normalarbeitspunkt bezeichnet werden kann, in Abhängigkeit von einer vorherrschenden Windgeschwindigkeit. Im Teillastbetrieb ergeben sich dann Drehzahl und Leistung des Normalarbeitspunktes besonders aus der Drehzahlleistungskurve. Vorsorglich wird darauf hingewiesen, dass statt einer Leistungsvorgabe grundsätzlich auch eine Drehmomentvorgabe zum Einstellen eines solchen Arbeitspunktes möglich ist, was vom Typ der Windenergieanlage abhängen kann. Die Vorgabe der Leistung oder des Drehmomentes sind insoweit gleichwirkend, da sie bei fester Drehzahl über die Gleichung P = n · m, die für den stationären Zustand gilt, ineinander umrechenbar sind. In der Gleichung ist P die Leistung (also Wirkleistung), n die Drehzahl und m das Drehmoment.

In einem weiteren Schritt erfolgt das Prüfen auf eine Abregelungsanforderung, bei der eine Reduzierung der Drehzahl und/oder Anlagenleistung angefordert wird. Eine solche Abregelungsanforderung kann von extern, beispielsweise durch einen Versorgungsnetzbetreiber, oder intern durch eine Berechnungsvorschrift und/oder zeitabhängig, insbesondere abhängig von einer Tageszeit, vorgegeben werden. Weiter unten werden noch Beispiele für Abregelungsanforderungen gegeben und erläutert.

Besonders kann eine solche Abregelungsanforderung darin bestehen, dass ein neuer Wert für die Anlagenleistung vorgegeben wird, der nämlich geringer als der aktuelle Wert der Anlagenleistung ist. Ebenso kann für die Drehzahl ein verringerter Sollwert vorgegeben werden, der eine geringere Drehzahl als die aktuelle Drehzahl vorgibt.

Liegt also eine solche Abregelungsanforderung vor, erfolgt das Bestimmen eines neuen Arbeitspunktes als Zielarbeitspunkt in Abhängigkeit von der Abregelungsanforderung, wobei der Zielarbeitspunkt durch eine Zieldrehzahl und eine Zielanlagenleistung gekennzeichnet ist. Üblicherweise wird die Abregelungsanforderung nur einen verringerten Drehzahlwert oder nur eine verringerte Abgabenleistung vorgeben. Beim Bestimmen eines neuen Arbeitspunktes als Zielarbeitspunkt wird also wenigstens die jeweils andere Größe bestimmt. Wird also eine Drehzahlreduzierung vorgegeben, aus der sich ein neuer Drehzahlwert als Zieldrehzahl ergibt, wird eine zugehörige Zielanlagenleistung bestimmt. Würde eine Leistungsabregelung mit entsprechender Leistungsvorgabe als Zielanlagenleistung vorgegeben werden, wird dazu eine zugehörige Zieldrehzahl bestimmt. Dadurch wird dieser Zielarbeitspunkt definiert und im Weiteren soll dann die Windenergieanlage diesen Zielarbeitspunkt anfahren.

Als Nächstes erfolgt das Bestimmen eines Blattsollwinkels als Zielblattwinkel für den Zielarbeitspunkt. Somit wird ein solcher Blattwinkel nicht ausgeregelt, sondern bereits von vornherein vorgegeben. Üblicherweise wird ein Blattwinkel von einer Drehzahlregelung verändert, die den Blattwinkel in Abhängigkeit von einer Abweichung zwischen Soll- und Ist-Drehzahl verändert. Das ist hier nicht vorgesehen, allenfalls ergänzend.

Hier wird somit vorgeschlagen, den Zielblattwinkel nicht durch einen Ausregelungsvorgangs zu finden, quasi als Endergebnis einer Ausregelung, sondern diesen gezielt von vornherein vorzugeben. Nach Empfang der Abregelungsanforderung wird also eine Zieldrehzahl als neue Drehzahl und eine Zielanlagenleistung als neue Anlagenleistung vorgegeben und dazu wird der Zielblattwinkel berechnet. Ausgehend vom aktuellen Arbeitspunkt, hier nämlich dem ersten Arbeitspunkt bzw. Normalarbeitspunkt, ist auch ein weiterer Rückschluss auf die Windsituation möglich.

Besonders ist hervorzuheben, dass der aktuelle Arbeitspunkt zwar durch die Drehzahl- und Anlagenleistung gekennzeichnet ist, gegebenenfalls auch durch den eingestellten Blattwinkel, dass aber die aktuelle Windgeschwindigkeit tatsächlich den aktuellen Arbeitspunkt im Wesentlichen festlegt. Das bedeutet insbesondere, dass bei Vorgabe einer Abregelungsanforderung, die Zielanlagenleistung zwar unmittelbar als Zielanlagenleistung festgelegt werden kann, dass die zugehörige Zieldrehzahl aber sehr unterschiedlich ausfallen kann, je nachdem wie die vorherrschende Windsituation ist. Da die Entnahme der Leistung aus dem Wind aufgrund der Abregelungsanforderung künstlich reduziert wird, sind zudem die Rotorblätter zu verstellen, es ist also ein neuer Blattwinkel vorzugeben, nämlich der Zielblattwinkel.

Umgekehrt wäre bei einer Abregelungsanforderung, die eine reduzierte Drehzahl vorgibt, auch zunächst ein geeigneter Wert der Zielanlagenleistung zu finden und zusätzlich ein geeigneter Zielblattwinkel. Im Falle der Drehzahlreduzierung wäre natürlich der Wunsch, die Leistung so wenig wie möglich zu reduzieren, es wird aber in den meisten Fällen dennoch notwendig sein, die Anlagenleistung und damit die Zielanlagenleistung zu reduzieren. Der Hauptgrund dafür kann in dem maximalen Generatormoment liegen, das dazu führt, dass bei einer geringen Drehzahl die Leistung auch geringer werden wird. Es können aber auch aerodynamische Gründe eine Rolle spielen bzw. mit relevant sein, denn es kann - vereinfacht ausgedrückt - mit stark reduzierter Drehzahl nicht mehr die optimale aerodynamische Leistung aus dem Wind entnommen werden.

Es wird weiter vorgeschlagen, dass zum Verändern des Blattwinkels zum Zielblattwinkel ein Vorsteuer-Blattwinkel, oder eine Vorsteuer-Verstellrate, die eine Verstellrate des Blattwinkels beschreibt, über eine Blattwinkel-Vorsteuerung vorgegeben wird, wobei die Blattwinkel-Vorsteuerung den Vorsteuer-Blattwinkel bzw. die Vorsteuer-Verstellrate unmittelbar zur Umsetzung an die Blattwinkelsteuerung gibt.

Der Blattwinkel wird also nicht ausgeregelt, sondern vorgegeben und eingestellt. Die Vorgabe kann dabei über eine Verstellrate erfolgen, also über die Vorgabe der Geschwindigkeit, mit der der Blattwinkel verstellt werden soll. Der Vorsteuer-Blattwinkel kann auch als Verlauf vorgegeben werden, sei es direkt oder über eine entsprechende Verstellrate. Wird nur ein konstanter Vorsteuerblattwinkel vorgegeben, kann dieser dem Zielblattwinkel entsprechen.

Mit anderen Worten, wird hier ein Blattwinkel vorgesteuert, also nicht oder zumindest nicht dominant durch eine Blattregelung verstellt. Der vorzusteuernde Blattwinkel, also der Vorsteuerblattwinkel, wird im Grunde lediglich zur tatsächlichen Umsetzung mittels entsprechender Aktuatoren an die Blattwinkelsteuerung gegeben.

Damit wird erreicht, dass der entsprechende Blattwinkel so schnell wie möglich angesteuert werden kann, ohne dass Rückführungen einer Regelung dies verzögern oder dadurch Schwingungen auslösen können. Besonders wird eine solche schwingungsanregende Rückführung damit in jedem Fall vermieden, egal von welchem Anfangsarbeitspunkt dieser zu welchem Zielarbeitspunkt verändert wird.

Insbesondere entspricht der Vorsteuerblattwinkel dem Zielblattwinkel. Es kommt aber in Betracht, dass ein geringfügig geringerer Wert für den Vorsteuerblattwinkel gewählt wird. Es wird dann der Zielblattwinkel nicht vollständig vorgesteuert, sondern beispielsweise nur zu 95 %. Der Vorsteuerblattwinkel kann einem Wert von 80 bis 99 % des Zielblattwinkels, oder einem Wert von 90 bis 99 % des Zielblattwinkels entsprechen. In diesem Fall wird das Grundprinzip der Vorsteuerung des Blattwinkels nicht verlassen, lediglich kann für die letzten wenigen Prozent eine andere Ansteuerung, möglicherweise auch eine Regelung zum Zielblattwinkel erfolgen. Dadurch können geringe Abweichungen ausgeglichen werden, die bei einer reinen Steuerung ohne Rückführung entstehen können. Solche Abweichungen können bspw. dadurch entstehen, dass sich der Wind während dem Verstellvorgang etwas verändert hat.

Das Vorsteuern des Vorsteuerblattwinkels, insbesondere des Zielblattwinkels, kann so umgesetzt werden, dass dieser Vorsteuerblattwinkel der Blattwinkelsteuerung unmittelbar zur Umsetzung übergeben wird bzw. diese den Blattwinkel unmittelbar durch entsprechende Ansteuerung der Aktuatoren umsetzt. Es läge dann ein Sprung des Blattwinkel vor. Da Antriebe zur Blattwinkelverstellung, also insbesondere Pitchmotoren, sehr schnell ihre Maximaldrehzahl erreichen können, könnte eine solche Blattwinkelvorsteuerung, bei der der Vorsteuerblattwinkel unmittelbar vorgegeben und umgesetzt wird, dazu führen, dass der Verstellantrieb bzw. Pitchmotor mit dieser maximalen Drehzahl dreht, bis der Sollblattwinkel erreicht wird, oder bis kurz vorher, z.B. bis zu einem Wert in einem Bereich von 90 bis 99 % des Sollblattwinkels bzw. Zielblattwinkels.

Alternativ kann zum Verändern des Betriebs statt des Vorsteuerblattwinkels die Verstellrate vorgegeben werden, die entsprechend eine einzustellende Verstellrate oder einen Teil davon bildet. Die Verstellrate gibt eine Blattwinkelverstellung pro Zeit an und damit im physikalischen Sinne eine Drehzahl, nämlich insbesondere für den Zeitraum, der benötigt wird, um zu dem Zielblattwinkel zu kommen. Anschaulich kann eine solche Verstellrate auch als zeitliche Rampe verstanden werden. Die Verstellrate reicht dann vom Anfangsblattwinkel des Normalarbeitspunktes zum Zielblattwinkel des Zielarbeitspunktes.

Das erfindungsgemäße Verfahren arbeitet also insbesondere so, dass nach einer Abregelungsanforderung ein neuer Zielarbeitspunkt bestimmt wird, für den die Zieldrehzahl, die Zielanlagenleistung und der Zielarbeitspunkt bestimmt werden, besonders als Schritt bevor die tatsächliche Veränderung des Arbeitspunktes eingeleitet wird. Zum Durchführen der Veränderung wird besonders ein Vorsteuerblattwinkel ebenfalls vorab bestimmt, der aber dem Zielblattwinkel entsprechen kann, und dieser vorgesteuert. Der Vorsteuerblattwinkel, also insbesondere der Zielblattwinkel werden dann ohne Regelung, also ohne Rückführung, unmittelbar durch die Blattwinkelsteuerung umgesetzt.

Ansonsten, wenn nicht die Veränderung vom Normalarbeitspunkt zum Zielarbeitspunkt durchgeführt wird, arbeitet die Blattwinkelsteuerung bzw. Blattwinkelverstellung so, dass sie in eine Drehzahlregelung, also einen Drehzahlregelkreis eingebunden ist. Abhängig von einer Abweichung zwischen Soll- und Istdrehzahl wird dann eine Blattwinkelveränderung bestimmt, oder eine Blattwinkelverstellrate, um den bzw. gemäß der das Rotorblatt in seinem Blattwinkel verstellt wird. Das verändert unmittelbar die Drehzahl, die über die Rückführung zum Vergleich zwischen Soll- und Istwert der Drehzahl zu einer veränderten Drehzahlregelabweichung führt und damit erneut bzw. in dieser Regelschleife kontinuierlich die Blattwinkeländerung bzw. Verstellrate wieder verändert.

Eine solche Einbindung der Blattverstellung in diese Drehzahlschleife wird beim Vorsteuern des Blattwinkels, also beim Umsetzen des Vorsteuerblattwinkels, durch die Blattwinkelvorsteuerung zumindest temporär ausgesetzt. Grundsätzlich wird sie ausgesetzt, bis der Zielblattwinkel erreicht ist. Sind aber nur noch geringe Abweichungen zum Zielblattwinkel vorhanden und/oder führt die Blattwinkelvorsteuerung nur noch zu geringer Verstellaktivität, kann die in den Drehzahlregelkreis eingebundene Blattwinkelsteuerung wieder aktiv werden, oder einen ergänzenden, nämlich insbesondere additiven Beitrag leisten.

Gemäß einem Aspekt wird vorgeschlagen, dass die Vorsteuerung den Vorsteuerblattwinkel bzw. die Vorsteuerverstellrate unabhängig von einer Drehzahlabweichung als Abweichung einer erfassten Drehzahl von einer vorgegebenen Drehzahl vorgibt, und/oder unabhängig von der erfassten Drehzahl und unabhängig von der erfassten Anlagenleistung vorgibt und außerdem oder alternativ die Vorsteuerung den Vorsteuerblattwinkel bzw. die Vorsteuerverstellrate unabhängig von der Drehzahlregelung und unabhängig von der Leistungsregelung vorgibt. Die Vorsteuerung und damit das Verstellen des Blattwinkels hängt somit nicht, zumindest nicht unmittelbar von der Drehzahl oder der Anlagenleistung ab. Das Verstellen des Blattwinkels wird Einfluss auf die Drehzahl und die Anlagenleistung haben, dieser Einfluss wird aber nicht im Sinne einer Regelung zurückgeführt, denn die Vorsteuerung versucht insoweit nicht, die erfasste Drehzahl oder die erfasste Anlagenleistung einem Sollwert nachzuführen. Genau das zeichnet die Vorsteuerung aus, dass sie nämlich den Blattwinkel vorgibt, oder dafür die Verstellrate, und dies direkt zur Verstellung des Blattwinkels verwendet wird. Rückführungen, die zu Schwingungen führen können, werden dadurch vermieden. Das bedeutet aber nicht, dass die Drehzahl gänzlich unbeachtet bleiben muss. Beispielsweise kann ein Windschätzer zur Bestimmung der Windgeschwindigkeit verwendet werden, und die so geschätzte Windgeschwindigkeit zur Bestimmung des vorzusteuernden Blattwinkels verwendet werden. Aber die Drehzahl wird hierbei nicht regelungstechnisch berücksichtigt, also nicht in dem Sinne, dass eine Drehzahlabweichung bzw. ein Drehzahlfehler berücksichtigt wird. Es kommt auch in Betracht, die Schnelllaufzahl zu berücksichtigen, die als Quotient aus Blattspitzengeschwindigkeit und Windgeschwindigkeit definiert ist. Aber auch dabei wird keine Drehzahlabweichung und daher keine Drehzahlregelung berücksichtigt.

Dass die Vorsteuerung unabhängig von der Drehzahlregelung und unabhängig von der Leistungsregelung arbeitet, bedeutet besonders, dass die Vorsteuerung weder in der Drehzahlregelschleife noch in der Leistungsregelschleife enthalten ist.

Insbesondere ist vorgesehen, dass das Verändern des Blattwinkels vom ersten Blattwinkel zum Zielblattwinkel vollständig oder zumindest überwiegend durch die Vorsteuerung vorgegeben wird. Es ist also nicht nur so, dass der Vorsteuerblattwinkel durch die Vorsteuerung vorgegeben wird, unabhängig von erfasster Drehzahl und Leistung und unabhängig von der Drehzahlregelung und Leistungsregelung, sondern dass auch gleichzeitig keine andere Steuerung oder Regelung den Blattwinkel verändert.

Es ist aber nicht unbedingt ausgeschlossen, dass eine weitere Regelung oder Steuerung in untergeordnetem Maße ebenfalls auf den Blattwinkel Einfluss nimmt. Beispielsweise könnte für die letzten 5 % noch eine Nachjustierung durch eine Regelung vorgesehen sein. Insbesondere erfolgt das Verändern des Blattwinkels durch die Vorsteuerung wenigstens auf 80 % des Weges vom ersten Blattwinkel zum Zielblattwinkel. Außerdem oder alternativ erfolgt das Verändern des Blattwinkels wenigstens zu 80 % durch die Vorsteuerung in dem Sinne, dass ein einzustellender Sollblattwinkel oder eine einzustellende Sollverstellrate im Durchschnitt über den Verfahrweg vom ersten Blattwinkel zum Zielblattwinkel zu wenigstens 80 % von der Vorsteuerung vorgegeben wird.

Gemäß einem Aspekt wird vorgeschlagen, dass als Zielblattwinkel ein Idealblattwinkel bestimmt wird, der bei stationären Bedingungen am Zielarbeitspunkt zur Zieldrehzahl und Zielleistung führt. Die stationären Bedingungen betreffen insoweit insbesondere eine konstante Windgeschwindigkeit. Die Windgeschwindigkeit unterliegt immer zumindest leichten Schwankungen, so dass die Annahme einer konstanten Windgeschwindigkeit insoweit eine idealisierte Betrachtung ist. Als diese Konstante, also insbesondere idealisierte Windgeschwindigkeit, kann diejenige angenommen werden, die dem ersten Arbeitspunkt zugeordnet ist. Der Idealblattwinkel ist also auch einer Windgeschwindigkeit zugeordnet werden.

Im Teillastbetrieb kann aus der aktuellen Drehzahl und der aktuell erzeugten Anlagenleistung die vorherrschende, also aktuelle, Windgeschwindigkeit abgeleitet werden. Ein solcher Arbeitspunkt entspricht einem Punkt auf der Drehzahl-Leistungskennlinie und diese Drehzahl-Leistungskennlinie ist einem Windgeschwindigkeitsverlauf zugeordnet, sodass zu jedem Punkt auf der Drehzahl-Leistungskennlinie eine Windgeschwindigkeit als aktuelle Windgeschwindigkeit abgelesen werden kann. Es kommt natürlich auch in Betracht, die Windgeschwindigkeit zu messen. Eine solche Windgeschwindigkeitsmessung ist auch möglich, kann aber, je nach Bedingung und je nach Messgerät zu Ungenauigkeiten führen. Zudem wird zum Bestimmen des Idealblattwinkels - vereinfacht ausgedrückt - auch eine ideale Windgeschwindigkeit gesucht. Diese ist gut aus dem aktuellen Arbeitspunkt ablesbar.

Befindet sich die Windenergieanlage im Volllastbetrieb, so kann aus dem ersten Blattwinkel, also dem Blattwinkel im ersten Arbeitspunkt, auf die Windgeschwindigkeit zurückgeschlossen werden. Dazu kann auch die Auslegung der Windenergieanlage herangezogen werden. Es kommt aber auch in Betracht, dass Erfahrungswerte herangezogen werden, oder auch hier kann natürlich die Windgeschwindigkeit gemessen werden.

Es wird auch angenommen, dass diese Windgeschwindigkeit des ersten Arbeitspunktes auch noch beim Erreichen des Zielarbeitspunktes vorliegt. Für den Zielarbeitspunkt ist durch die Abregelungsanforderung entweder eine Drehzahl oder eine Leistung vorgegeben.

Ist beispielsweise die Drehzahl für den Zielarbeitspunkt vorgegeben, so kann die maximal mögliche Leistung gesucht werden, die in den meisten Fällen diejenige Leistung sein kann, bei der für das Drehmoment Nennmoment vorliegt. Dazu kann ein Blattwinkel gefunden werden, bei dem sich bei der vorhandenen Windgeschwindigkeit und vorgegebenen Drehzahl diese Leistung aus dem Wind entnehmen lässt. Das ist dann der Idealblattwinkel, bzw. der Zielblattwinkel.

Es kann auch vorkommen, dass andere Einflüsse, wie aerodynamische Randbedingungen, die maximal erzeugbare Leistung beeinflussen, also weiter begrenzen. Um dies zu berücksichtigen, können im Vorfeld Simulationen durchgeführt werden, bei denen Windgeschwindigkeit, Leistung und Drehzahl variiert werden. Dadurch ist ein entsprechendes Datenfeld ermittelbar, das hinterlegt werden kann. Um dann zu einer vorhandenen Windgeschwindigkeit und vorgegebenen Drehzahl einen geeigneten Leistungswert mit zugehörigen Blattwinkel zu finden, können entsprechende Werte in den hinterlegten Daten ausgewählt und zwischen ihnen interpoliert werden.

Ganz ähnlich ist es in dem Fall, wenn die Abregelungsanforderung eine Leistungsreduzierung vorgibt. In diesem Fall wird nach einer geeigneten Drehzahl gesucht, die allerdings meistens nicht die maximale Drehzahl ist. Vielmehr wird eine Drehzahl gesucht, die einen aerodynamisch möglichst stabilen Betrieb gewährleistet. Auch hierzu können im Vorfeld Simulationen aufgenommen und in einem Datenfeld hinterlegt werden, auf das dann zur Bestimmung der Drehzahl und dem zugehörigen Blattwinkel zugegriffen werden kann, um einen passenden Wert zu finden. Auch hier kann zwischen zwei Werten interpoliert werden.

Gemäß einem Aspekt wird vorgeschlagen, dass die Vorsteuerung einen festen Blattwinkel oder einen fest vorgegebenen zeitlichen Blattwinkelverlauf als den Vorsteuerblattwinkel vorgibt bzw. dass die Vorsteuerung eine feste Verstellrate als die Vorsteuerverstellrate vorgibt. Außerdem oder alternativ wird vorgeschlagen, dass der Vorsteuerblattwinkel bzw. die Vorsteuerverstellrate unter Verwendung eines Modells bestimmt wird, das ein Verhalten der Windenergieanlage abbildet. Als fester Blattwinkel kann besonders der Zielblattwinkel vorgegeben werden.

Dadurch wird eine besonders schnelle Verstellung zu diesem Zielblattwinkel durchgeführt. Es kommt aber auch in Betracht, einen genauen zeitlichen Verlauf des Blattwinkels vorzugeben. Beispielsweise kann ein zeitlich stetiger Verlauf, insbesondere linearer Verlauf, vorgegeben werden, um vom ersten Blattwinkel zum Vorsteuerblattwinkel, insbesondere Zielblattwinkel, zu gelangen. Es kommen aber auch andere Verläufe in Betracht, bei denen auch auf eine vorbestimmte Art und Weise der Blattwinkel zunächst schneller und dann langsamer verstellt wird, oder umgekehrt.

Ebenso kann eine Verstellrate vorgegeben werden, die letztlich die Veränderung des Blattwinkels pro Zeit wiedergibt, die integrierte Verstellrate führt also zum Vorsteuerblattwinkel, insbesondere Zielblattwinkel. Durch die Vorgabe der Verstellrate kann der Aktuator, also besonders der Pitchmotor bzw. Pitchantrieb besser angesteuert werden.

Zum Umsetzen der Vorsteuerung wird besonders vorgeschlagen, ein Modell zu verwenden, das ein Verhalten der Windenergieanlage abbildet. Dadurch sind unter Berücksichtigung der vorherrschenden Windgeschwindigkeit mögliche Arbeitspunkte modellierbar, die zur Umsetzung der Abregelungsanforderung in Betracht kommen. Darauf aufbauend kann basierend auf einer oder mehreren Randbedingungen ein geeigneter Zielarbeitspunkt gefunden werden, oder wenn nur ein sinnvoller Zielarbeitspunkt zur Umsetzung in Betracht kommt, kann auch dieser gefunden werden.

Bei Vorgabe einer Abregelungsanforderung, die einen verringerten Drehzahlwert vorgibt, kann eine Randbedingung sein, die Anlagenleistung zu maximieren. Dabei einzuhaltende Grenzen, wie das maximale Generatormoment und natürlich auch die maximal zugelassene Leistung, können weitere Randbedingungen sein.

Im Falle der Vorgabe einer reduzierten Leistung als Abregelungsanforderung kann eine Randbedingung sein, einen aerodynamisch möglichst stabilen Arbeitspunkt zu finden. Hier werden besonders Arbeitspunkte im Modell berücksichtigt und verglichen, die aus dem Wind eine aerodynamische Leistung entnehmen, die der durch die Abregelungsanforderung vorgegebenen reduzierten Anlagenleistung entspricht, zuzüglich Leistungsverlusten, die hier aber zur Erläuterung vernachlässigt werden. Diese aerodynamische Leistung hängt von der Rotordrehzahl und dem Blattwinkel ab. Häufig kann hier eine Betrachtung über eine Schnelllaufzahl vorgenommen werden. Durch die Modellbildung können jedenfalls Arbeitspunkte gefunden werden, die zur gewünschten aerodynamischen Leistung führen, die also aus dem Wind entnommen wird.

Die Modellbildung kann auch dazu verwendet werden, den Blattwinkelverlauf und/oder die Verstellrate zu modellieren. Das Modell kann dabei berücksichtigen, welche Zustände die Windenergieanlage auf dem Weg vom ersten Arbeitspunkt zum Zielarbeitspunkt annimmt. Entsprechend kann der Vorsteuerblattwinkel bzw. die Verstellrate vorgegeben werden. Beispielsweise kann durch diese Modellbildung ein Strömungsabriss vermieden werden, was anderenfalls zu einem Anhalten der Windenergieanlage führen könnte.

Besonders wird vorgeschlagen, dass der Vorsteuerblattwinkel und damit insbesondere der Zielblattwinkel bzw. dafür eine Verstellrate, durch ein Modell bestimmt wird und sich nicht durch eine Regelschleife ergibt, bei der der Blattwinkel solange verstellt wird, bis der ansonsten gewünschte Arbeitspunkt erreicht wird.

Gemäß einem Aspekt wird vorgeschlagen, dass für den Zielarbeitspunkt eine Zielschnelllaufzahl als den Zielarbeitspunkt kennzeichnende Schnelllaufzahl vorgesehen ist, und der Zielblattwinkel so bestimmt wird, dass sich beim Zielarbeitspunkt die Zielschnelllaufzahl bei stationären Bedingungen einstellt. Über die Schnelllaufzahl kann ein aerodynamisches Verhalten des Rotors in dem jeweiligen Arbeitspunkt, hier dem Zielarbeitspunkt, gekennzeichnet werden. Die Schnelllaufzahl, hier also die Zielschnelllaufzahl, kann sich bei einer Modellbildung für den Zielarbeitspunkt ergeben. Es kommt auch in Betracht, dass die Schnelllaufzahl aus Erfahrungswerten für die vorherrschende Windgeschwindigkeit und die gegebene Abregelungsanforderung vorgegeben wird. Der Zielblattwinkel wird dann so bestimmt, dass sich diese Zielschnelllaufzahl am Zielarbeitspunkt einstellt.

Gemäß einem Aspekt wird vorgeschlagen, dass eine Abregelungsanforderung eine Drehzahlanforderung ist, als Anforderung einer Drehzahlabsenkung, insbesondere zum Schutz eines sich nähernden Tieres, wie ein Vogel oder eine Fledermaus, wobei die Drehzahlanforderung insbesondere eine konkrete Zieldrehzahl der Höhe nach vorgibt. Hier kommt insbesondere in Betracht, dass ein sich näherndes Tier, insbesondere Vogel oder Fledermaus, erfasst wird und abhängig von der Flugrichtung und Fluggeschwindigkeit des Tieres die Drehzahl der Windenergieanlage so stark reduziert wird, dass das Tier nicht durch ein Rotorblatt erschlagen oder verletzt wird. Eine solche Drehzahl wird dann als Abregelungsanforderung vorgegeben. Beispielsweise kann ein Wert von einer Umdrehung pro Minute (1 U/min) vorgegeben werden, um ein einfaches Beispiel zu nennen. Diese beispielhaft genannte Drehzahl wäre dann die Zieldrehzahl, die durch diesen Wert konkret der Höhe nach vorgegeben werden könnte.

Es kommt auch in Betracht, dass die Abregelungsanforderung eine Leistungsanforderung als Anforderung einer Absenkung der Anlagenleistung vorgibt, insbesondere zur Stützung des elektrischen Versorgungsnetzes, wobei die Leistungsanforderung insbesondere eine konkrete Zielleistung der Höhe nach vorgibt. Beispielsweise kann ein Netzbetreiber eine Leistungsreduzierung fordern und dazu einen prozentualen Abregelungswert vorsehen. Ein solcher prozentualer Abregelungswert kann an eine zentrale Parkregelung gegeben werden, die daraus für jede Windenergieanlage des Parks einen konkreten Leistungswert vorgibt, beispielsweise 1 MW, wenn die Windenergieanlage zuvor mehr Leistung erzeugt und eingespeist hat. Jedenfalls kann dieser Leistungswert, der eine konkrete Zielleistung der Höhe nach darstellt, als Abregelungsanforderung berücksichtigt werden, um davon abhängig den Zielarbeitspunkt zu bestimmen.

Gemäß einem Aspekt wird vorgeschlagen, dass im Falle einer Leistungsanforderung als Abregelungsanforderung für die Anlagenleistung eine Maximalleistung vorgegeben wird, die aktuelle Anlagenleistung, sofern sie größer als die Maximalleistung ist, auf die Maximalleistung abgesenkt wird, und zum Verändern der Drehzahl zur Zieldrehzahl der Blattwinkel mittels der Blattwinkel-Vorsteuerung zum Zielblattwinkel hin verstellt wird, wobei die Vorsteuerung den Blattwinkel oder die Verstellrate als Stellgröße vorgibt.

Somit wird vorgeschlagen, dass zum Abregeln der Leistung diese möglichst schnell, insbesondere maximal so schnell, wie das physikalisch möglich ist, auf den vorgegebenen Wert abgesenkt wird. Das kann so erfolgen, dass nach Erhalt der Abregelungsanforderung eine in das elektrische Versorgungsnetz einspeisende Einspeiseeinheit der Windenergieanlage nur noch die Leistung gemäß der Abregelungsanforderung einspeist.

Diese schnelle Leistungsreduzierung kann kurzfristig dazu führen, dass zu viel Leistung von der Windenergieanlage aus dem Wind erzeugt wird, die nicht eingespeist werden kann. Solche Zu-viel-Leistung kann zu einer kurzzeitigen Beschleunigung des aerodynamischen Rotors führen und/oder es kann vorgesehen sein, solche überschüssige Leistung aus einem elektrischen Zwischenkreis der Einspeiseeinheit, oder anderweitig, über Widerstände zu führen, um diese überschüssige Leistung in Wärme umzusetzen. Das kann auch als Weg-Choppern bezeichnet werden.

In jedem Fall ist aber die Windenergieanlage in ihrem Arbeitspunkt dann so schnell wie möglich an die verringerte Leistung anzupassen. Das bedeutet besonders, dass die Drehzahl verringert wird und die Blattwinkel verstellt werden, um die Rotorblätter zumindest teilweise aus dem Wind zu drehen. Dazu wird ein entsprechend neuer Arbeitspunkt bestimmt, nämlich der Zielarbeitspunkt, und somit wird eine Zieldrehzahl und ein Zielblattwinkel bestimmt.

Zur Umsetzung, also zum Verändern der Drehzahl zur Zieldrehzahl, wird der Blattwinkel mittels der Blattwinkel-Vorsteuerung zum Zielblattwinkel hin verstellt. Im einfachsten Fall kann eine Verstellrate von beispielsweise 5 Grad pro Sekunde vorgegeben werden, mit der der Blattwinkel zum Zielblattwinkel hin verstellt wird. Weitere Möglichkeiten werden nachfolgend noch beschrieben.

Gemäß einem Aspekt wird vorgeschlagen, dass im Falle einer Drehzahlanforderung als Abregelungsanforderung die Zieldrehzahl vorgegeben wird, die Anlagenleistung in Abhängigkeit von der vorgegebenen Zieldrehzahl eingestellt wird und zum Verändern der Drehzahl zur Zieldrehzahl der Blattwinkel mittels der Blattwinkel-Vorsteuerung zum Zielblattwinkel hin verstellt wird.

Der wesentliche Unterschied der vorgegebenen Drehzahlabregelung zur vorgegebenen Leistungsabregelung ist somit, dass die Zieldrehzahl fest vorgegeben wird, während die Anlagenleistung zur Reduzierung der Drehzahl, insbesondere zum Abbremsen genutzt werden kann. Insbesondere kann anfangs die Anlagenleistung noch hoch sein, um dadurch die Drehzahl schnell zu reduzieren. Zur Reduzierung kann aber auch eine aerodynamische Leistung, also die Leistung, die aus dem Wind entnommen wird, vorgegeben werden, insbesondere negativ, um dadurch zu bremsen, was nachfolgend noch erläutert wird.

Besonders wird vorgeschlagen, wenn eine Drehzahlanforderung als Abregelungsanforderung vorgegeben wird, dass zum Abbremsen des Rotors die Anlagenleistung, oder ein Generatormoment vorgegeben werden, um zusammen mit einer vorgesteuerten aerodynamischen Leistung ein möglichst starkes Abbremsen des Rotors zu erreichen. Hier kann zusätzlich zur aerodynamischen Leistung elektrisch gebremst werden, wenn die Anlagenleistung bzw. das Generatormoment bereits maximal sind, kann die dadurch bedingte Bremswirkung beibehalten werden, ansonsten kann die Anlagenleistung bzw. das Generatormoment noch so weit möglich erhöht werden.

Sowohl der vorgegebenen Drehzahlabregelung als auch der vorgegebenen Leistungsabregelung ist gemein, dass zum Verändern der Drehzahl zur Zieldrehzahl der Blattwinkel mittels der Blattwinkelvorsteuerung zum Zielblattwinkel hin verstellt wird. Dieser Blattwinkel bzw. diese Verstellrate für den Blattwinkel werden als Stellgröße vorgegeben und dabei der Blattwinkelsteuerung zur Umsetzung gegeben Wie der Blattwinkel hierfür durch die Vorsteuerung bestimmt werden kann, wird nachfolgend noch erläutert.

Gemäß einem Aspekt wird vorgeschlagen, dass die Blattwinkelvorsteuerung den Blattwinkel oder die Verstellrate als Stellgröße vorgibt. Das soll vorzugsweise modellbasiert erfolgen. Bei der Vorgabe des Blattwinkels bzw. der Verstellrate wird dafür ein Modell zu Grunde gelegt, das ein Verhalten der Windenenergieanlage nachbildet. Dieser Blattwinkel bzw. diese Verstellrate für den Blattwinkel werden als Stellgröße der Blattwinkelsteuerung zur Umsetzung gegeben. Die Blattwinkelsteuerung steuert dann entsprechend einen oder mehrere Aktuatoren zum Verstellen des jeweiligen Rotorblattes an. In diesem Sinne werden alle Rotorblätter verstellt.

Dadurch kann schnell der neue Betriebspunkt, nämlich der Zielbetriebspunkt, erreicht werden, indem dann nicht mehr zu viel Leistung erzeugt wird bzw. die Drehzahl ihren Abregelungswert erreicht hat.

Insbesondere ist vorgesehen, dass die Drehzahlregelung einen Blattwinkel oder eine Verstellrate des Blattwinkels in Abhängigkeit von einer Drehzahlabweichung als Stellgröße vorgibt und die Drehzahlregelung, zumindest zeitweise, der Blattwinkel-Vorsteuerung untergeordnet ist, sodass die von der Drehzahlregelung vorgegebene Stellgröße zumindest zeitweise nicht oder nur mit einer Gewichtung von unter 50 % an die Blattwinkelsteuerung weitergegeben wird.

Die Drehzahlregelung, die einen Blattwinkel oder eine Verstellrate des Blattwinkels in Abhängigkeit von der Drehzahlabweichung bestimmt, kann somit auch außerhalb eines Normalbetriebs, also außerhalb des ersten Arbeitspunktes vorgesehen sein, also auch zum Ansteuern des Zielarbeitspunktes. Es ist aber vorgesehen, dass die Drehzahlregelung der Vorsteuerung nur untergeordnet ist. Anders ausgedrückt wird die Drehzahlregelung zum Ansteuern des Zielarbeitspunktes nur ergänzend verwendet. Das kann dadurch realisiert werden, dass zeitweise, nämlich insbesondere zur überwiegenden Zeit, also wenigstens zu 60% der Zeit, die Stellgröße, die die Drehzahlregelung erzeugt, nicht aufgeschaltet wird und somit in der Zeit das Verstellen des Blattwinkels nur aufgrund der Vorsteuerung durchgeführt wird. Außerdem oder stattdessen kommt auch in Betracht, dass die Unterordnung der Drehzahlregelung unter die Vorsteuerung durch eine Gewichtung erreicht wird. Hierfür kann die Stellgröße, die von der Drehzahlregelung vorgegeben wird, gewichtet werden, also mit einem Wert zwischen 0 und 1 multipliziert werden. Bei einer Gewichtung von 50% wird die Stellgröße somit mit 0,5 multipliziert.

Insbesondere wird vorgeschlagen, dass von der Drehzahlregelung und der Blattwinkel-Vorsteuerung jeweils diejenige aktiv ist, die betragsmäßig den größeren einzustellenden Blattwinkel bzw. die größere einzustellende Verstellrate als Stellgröße ausgibt. Die Blattwinkel-Vorsteuerung ist dazu vorgesehen, den Blattwinkel möglichst schnell vom ersten Blattwinkel zum Zielblattwinkel zu verstellen. Damit gibt die Vorsteuerung eine sehr große Stellgröße vor, die meist größer ist, als die Stellgröße, die die Drehzahlregelung bestimmt.

Besonders zum Ende hin, wenn die durch die Vorsteuerung vorgegebene Stellgröße kleiner als die von der Drehzahlregelung vorgegebene Stellgröße ist, kann zur Drehzahlregelung gewechselt werden. Das kommt besonders dann in Betracht, wenn der Blattwinkel fast den Zielblattwinkel erreicht hat und sich dann möglicherweise herausstellt, dass der durch das Modell vorbestimmte Zielblattwinkel nicht exakt zu dem gewünschten Betrieb der Windenergieanlage im Zielarbeitspunkt führt.

Wird in dem erreichten Zielarbeitspunkt, also bei dem erreichten Zielblattwinkel, mehr Leistung aus dem Wind entnommen als an elektrischer Anlagenleistung erzeugt wird, ist die aerodynamische Leistung also größer als angenommen, führt das zur Beschleunigung des Rotors. Dem wirkt die Drehzahlregelung entgegen und daher wird vorgeschlagen, dass sie zum Ende hin die Blattverstellung übernimmt.

Wenn die Blattwinkel-Vorsteuerung und die Drehzahlregelung parallel arbeiten, können ihre beiden Stellgrößen miteinander verglichen werden. Ist die Stellgröße der Drehzahlregelung betragsmäßig größer, wird auf die Drehzahlregelung umgeschaltet. Hier wurde besonders erkannt, dass der Zielarbeitspunkt möglichst schnell erreicht werden soll und das geschieht üblicherweise mit großen Stellgrößen. Wird also die Stellgröße der Drehzahlregelung größer als die der Vorsteuerung, kann die Drehzahlregelung die Vorsteuerung ablösen und den idealen Arbeitspunkt finden, der von dem vorberechneten Zielarbeitspunkt abweichen kann.

Gemäß einem Aspekt kann ein zeitlicher Verlauf der Drehzahl vorgegeben werden, so dass also ein zeitlicher Verlauf einer Solldrehzahl vorgegeben wird. Auch das kann modellbasiert erfolgen.

Die Blattwinkel-Vorsteuerung bzw. ein vorbestimmter Verlauf des Vorsteuer-Blattwinkels, ist darauf abgestimmt, dass der Blattwinkel unter Berücksichtigung der reduzierten Anlagenleistung so verändert wird, dass sich etwa dieser Verlauf der Solldrehzahl einstellt. Es ist also nur mit einer geringen Abweichung zwischen Soll-Drehzahl und Ist-Drehzahl zu rechnen. Das führt dazu, dass auch eine Drehzahlregelung, die diese geringe Abweichung ausregeln will, nur zu einer geringen Stellgröße führt.

Erst zum Ende der Verstellung hin, also in der Nähe des Zielarbeitspunktes und damit in der Nähe des Zielblattwinkels können größere Abweichungen auftreten. Das kann dadurch begründet sein, dass die Stellgröße der Vorsteuerung null wird, wenn der vorbestimmte Zielblattwinkel erreicht ist. Liegen nun aber noch geringe Abweichungen zum vorbestimmten Verlauf vor, wird die Drehzahlregelung eine Stellgröße vorgeben, die nicht null und damit größer als die Stellgröße der Blattwinkel-Vorsteuerung ist. Die Drehzahlregelung kann dann aktiv werden, indem sie aufgeschaltet wird.

Der Drehzahlverlauf kann auch indirekt dadurch vorgegeben werden, dass eine Drehzahländerung mit der Zeit, also eine Drehzahlveränderungsrate vorgegeben wird. In Abhängigkeit von dieser Drehzahländerungsrate kann zu jedem Zeitpunkt ein Drehzahlsollwert durch Multiplikation mit der abgelaufenen Zeit berechnet werden.

Gemäß einem Aspekt wird vorgeschlagen, dass zum Verändern der Drehzahl eine aerodynamische Bremsgröße vorgegeben wird, wobei die aerodynamische Bremsgröße als Rotorbeschleunigung oder aerodynamische Leistung vorgesehen ist Außerdem oder alternativ kann sie eine negative Beschleunigung bzw. eine Bremsung bzw. Verzögerung sein. Die Bremsgröße kann als ein Signalverlauf ausgebildet sein, muss also kein fester Wert sein.

Die aerodynamische Leistung ist eine Leistung, die der Rotor aus dem Wind erzeugt, also aus dem Wind entnimmt. Diese aerodynamische Leistung hängt von der Windgeschwindigkeit, der Rotordrehzahl und dem Blattwinkel ab.

Weiter ist vorgesehen, dass in Abhängigkeit von der vorgegebenen Bremsgröße der Vorsteuerblattwinkel bestimmt wird, um die vorgegebene Bremsgröße zu erreichen. Wenn als Bremsgröße die aerodynamische Leistung vorgegeben wird, wird durch das Vorgeben des Blattwinkels so, dass die aerodynamische Leistung erreicht wird, somit die aerodynamische Leistung vorgesteuert. Durch den Blattwinkel, der vorgesteuert wird, wird nämlich erreicht, dass die aerodynamische Leistung aus dem Wind entnommen wird.

Das Vorsteuern der aerodynamischen Leistung kann somit bedeuten, dass unter Berücksichtigung des vorherrschenden Windes die Rotordrehzahl und der Blattwinkel eingestellt werden. Die Rotordrehzahl kann nicht unmittelbar eingestellt werden, da sie sich einerseits langsam verändert und andererseits das Ergebnis der Interaktion zwischen dem Rotor und dem Wind ist. Diese Interaktion kann aber durch den Blattwinkel beeinflusst werden. Insbesondere kann - vereinfachend ausgedrückt - bei einer vorhandenen Windgeschwindigkeit und einer vorhandenen Rotordrehzahl der Blattwinkel so eingestellt werden, dass sich eine gewünschte aerodynamische Leistung ergibt. Genau das wird beim Vorsteuern der aerodynamischen Leistung gemacht. Der Rotorblattwinkel wird so eingestellt, dass sich die aerodynamische Leistung, die eingestellt, also vorgesteuert, werden soll, ergibt.

Das Vorsteuern der aerodynamischen Leistung erfolgt so, dass der Blattwinkel über die Blattwinkel-Vorsteuerung vorgegeben wird, um die aerodynamische Leistung zu erreichen. Somit wird der Blattwinkel also durch die Blattwinkel-Vorsteuerung verstellt und damit nicht durch eine regelungstechnische Rückführung verändert. Insoweit muss das Verstellen des Blattwinkels für die Blattwinkel-Vorsteuerung auch in Erwartung der sich einstellenden Rotordrehzahl vorausgeplant werden, oder in Abhängigkeit einer erfassten und/oder geschätzten Rotordrehzahl ständig nachgeführt werden.

Insbesondere wird vorgeschlagen, dass abhängig von Drehzahl, Windgeschwindigkeit und vorgegebener aerodynamischer Leistung, oder alternativ einer Rotorbeschleunigung, ein Blattwinkel bestimmt wird, der zu der vorgegebenen aerodynamischen Leistung führt.

Die Drehzahl kann also erfasst und/oder geschätzt werden, oder das zu erwartende Verhalten der Drehzahl kann vorausbestimmt werden, was durch eine Vorausberechnung, Simulation oder Modulierung erfolgen kann, und basierend auf dieser erfassten/geschätzten oder vorberechneten Rotordrehzahl, also dem vorberechneten Rotordrehzahlverlauf, wird der Blattwinkel entsprechend so eingestellt, dass sich die aerodynamische Leistung, oder vorgegebene Rotorbeschleunigung, ergibt. Der Blattwinkel wird quasi dem Drehzahlverlauf nachgeführt, um immer die aerodynamische Leistung einzustellen, die vorgegeben wurde.

Der Blattwinkel kann dafür jeweils modellbasiert bestimmt werden, sodass über ein Modell der entsprechende Blattwinkel bestimmt wird, insbesondere berechnet wird. Ein solches Modell bildet das Verhalten der Windenergieanlage nach, berücksichtigt es zumindest.

Dadurch, dass dies über die Vorsteuerung erfolgt, werden etwaige Schwingungen durch Regelungsrückführungen vermieden.

Gemäß einem Aspekt wird vorgeschlagen, dass das Vorgeben des Vorsteuerblattwinkels kontinuierlich, oder zumindest in zeitlich kurzen Schritten unter einer Sekunde, wiederholt wird. Hierdurch wird der Vorsteuerblattwinkel immer an den aktuellen Arbeitspunkt angepasst. Besonders soll durch den Blattwinkel die aerodynamische Leistung eingestellt werden, und die hängt von der Schnelllaufzahl und damit von der Rotordrehzahl ab. Daher sollte der Blattwinkel möglichst gut an die Rotordrehzahl angepasst werden. Diese kann dazu erfasst, geschätzt oder vorausberechnet werden.

Gemäß einem Aspekt wird vorgeschlagen, dass zum Vorgeben des Vorsteuerblattwinkels, insbesondere aus der aerodynamischen Bremsgröße, ein einzustellender Leistungsbeiwert bestimmt wird, und abhängig von dem Leistungsbeiwert der Vorsteuerblattwinkel bestimmt wird, um den Leistungsbeiwert zu erreichen.

Dieser Leistungsbeiwert, der auch als Cp-Wert bezeichnet werden kann, gibt das Verhältnis zwischen der aus dem Wind entnommenen Leistung zur entnehmbaren Leistung an. Über ihn kann bei bekannter verfügbarer Leistung, die wiederum im Wesentlichen aus der erfassten Windgeschwindigkeit abgeleitet werden kann, die aerodynamische Leistung, nämlich die entnommene Leistung, gesteuert werden. Zu einem aerodynamischen Rotor einer Windenergieanlage liegt üblicherweise ein Kennfeld vor, das für diesen Rotor einen Zusammenhang zwischen Schnelllaufzahl, Blattwinkel und Leistungsbeiwert angibt. Das Kennfeld kann als gekrümmte Fläche in einem Koordinatensystem mit diesen drei Größen aufgespannt sein, indem zu jedem Paar aus Blattwinkel und Schnelllaufzahl der zugehörige Cp-Wert eingetragen ist, sodass all diese Cp-Werte die gekrümmte Fläche bilden.

Wird der einzustellende Leistungsbeiwert bestimmt, also dadurch vorgegeben, kann bei bekannter Windgeschwindigkeit und Rotordrehzahl die Schnelllaufzahl berechnet werden. Mit dem Leistungsbeiwert und der Schnelllaufzahl ist dann der zugehörige, und damit einzustellende Blattwinkel als Vorsteuerblattwinkel ablesbar.

Gemäß einem Aspekt wird vorgeschlagen, dass zum Vorgeben der aerodynamischen Bremsgröße eine Idealbremsgröße vorgegeben wird, und die Idealbremsgröße mittels eines Filters gefiltert wird, um die aerodynamische Bremsgröße zu erhalten, wobei der Filter aus der vorgegebenen Idealbremsgröße wenigstens eine Eigenschwingfrequenz der Windenergieanlage filtert, die insbesondere eine Turmeigenfrequenz ist, insbesondere die erste Turmeigenfrequenz, um die aerodynamische Bremsgröße zu erhalten. Besonders ist der Filter ein Bandstoppfilter und/oder Notchfilter ausgebildet.

Die Idealbremsgröße kann somit eine ideale aerodynamische Leistung sein, oder eine ideale Beschleunigung, nämlich negative Beschleunigung, um den Rotor abzubremsen, nämlich insbesondere so schnell wie möglich. Am Beispiel der aerodynamischen Leistung kann das besonders ein Sprung der aerodynamischen Leistung von einem Maximalwert, z.B. Nennleistung der Windenergieanlage, zu einem Minimalwert, z.B. der negativen Nennleistung der Windenergieanlage sein. Auch im Falle der Vorgabe einer Rotorbeschleunigung kann das ein Sprung auf einen negativen Wert sein.

Es wurde aber erkannt, dass ein solcher Sprung eine Frequenzkomponente mit einer Anregungsfrequenz besonders für eine Turmschwingung beinhalten kann. Daher wird vorgeschlagen, diese Frequenzkomponente aus der Idealbremsgröße herauszufiltern, diese Frequenzkomponente zumindest zu reduzieren. Das Ergebnis nach der Filterung ist die (nicht mehr ideale) aerodynamische Bremsgröße, die dann in bereits beschriebener Art und Weise zum Bestimmen des Vorsteuerblattwinkels verwendet werden kann.

Um die Frequenzkomponente herauszufiltern, oder zumindest zu reduzieren, wird besonders ein Bandstoppfilter bzw. Notchfilter vorgeschlagen, der geeignet ist, gezielt eine Frequenzkomponente bzw. einen engen Frequenzbereich herauszufiltern. Dadurch kann ein Großteil der vorgegebenen Idealbremsgröße erhalten bleiben. Die Reduzierung der Rotordrehzahl ist daher weiterhin sehr schnell möglich, aber ohne die betreffende Schwingung, also insbesondere ohne die Turmschwingung anzuregen.

Insbesondere wird vorgeschlagen, dass das Bestimmen des Blattwinkels abhängig von Drehzahl, Windgeschwindigkeit und vorgegebener aerodynamischer Leistung modellbasiert und/oder basierend auf vorbestimmten Zusammenhängen zwischen diesen drei Größen erfolgt, um dadurch die aerodynamische Leistung einzustellen.

Hier wurde besonders erkannt, dass durch die Vermeidung einer Regelungsrückführung Schwingungen vermieden werden können. Außerdem ist auch eine besonders schnelle Verstellung des ersten Arbeitspunktes hin zum Zielarbeitspunkt möglich, weil durch die Vorsteuerung die Möglichkeiten des Verstellens, insbesondere unter Berücksichtigung von Stellgrößenbeschränkungen, voll ausgeschöpft werden können.

Aufgrund der fehlenden Regelungsrückführung wird somit der jeweilige aktuelle Arbeitspunkt, soweit er durch Rotordrehzahl und Blattwinkel bestimmt ist, vorausberechnet. Hier kommt insbesondere in Betracht, dass ein entsprechender Verlauf dieses Arbeitspunktes, denn Blattwinkel und Rotordrehzahl werden sich vom ersten Arbeitspunkt zum Zielarbeitspunkt stetig verändern, vorausberechnet wird. Die Vorausberechnung mag Ungenauigkeiten aufweisen, die durch eine Regelung zumindest teilweise herausgeregelt werden könnten. Auf eine solche Regelung wird aber zumindest weitestgehend verzichtet, um die genannten Nachteile der Regelung zu vermeiden. Geringe Ungenauigkeiten werden dafür in Kauf genommen. Es wurde aber erkannt, dass solche Ungenauigkeiten besser hinnehmbar sind, als die zur Regelung genannten Nachteile.

Diese Vorausberechnung, insbesondere Vorausberechnung der Zusammenhänge zwischen Blattwinkeldrehzahl, Windgeschwindigkeit und vorgegebener aerodynamischer Leistung können vorbestimmt werden, nämlich vorberechnet werden. Diese Vorberechnung kann modellbasiert erfolgen. Eine solche modellbasierte Vorberechnung bedeutet, dass ein Modell der Windenergieanlage zu den genannten Größen vorliegt und damit dieses zu erwartende Verhalten modelliert bzw. simuliert wird, um dadurch den geeigneten Wert für den vorzusteuernden Blattwinkel zu bestimmen. Eine solche Vorbestimmung muss nicht offline und vor der Inbetriebnahme erfolgen, sondern sie kann auch im laufenden Betrieb vorgenommen werden, wenn die jeweiligen Gegebenheiten bekannt sind, nämlich die aktuelle Windgeschwindigkeit und die aktuelle Abregelungsanforderung, also insbesondere die vorgegebene reduzierte Drehzahl.

Außerdem oder alternativ wird vorgeschlagen, dass die Blattwinkelvorsteuerung den Blattwinkel oder die Blattwinkelverstellrate als Stellgröße vorgibt, um die aerodynamische Leistung vorzusteuern, und die Drehzahlregelung, zumindest zeitweise, der Blattwinkelvorsteuerung untergeordnet ist. Die Blattwinkelvorsteuerung und die Drehzahlregelung geben also beide einen Blattwinkel oder eine Verstellrate aus, die aber nicht beide zugleich zur Verstellung des Rotorblattes verwendet werden. Vielmehr erfolgt die Verstellung überwiegend durch den Wert, der von der Blattwinkel-Vorsteuerung ausgegeben wird. Besonders zum Ende hin kann aber die Drehzahlregelung übernehmen, oder es kann eine gewichtete Berücksichtigung erfolgen, wie dies oben bereits im Zusammenhang mit der Vorgabe einer reduzierten Leistung als Abregelungsanforderung erläutert wurde.

Insbesondere wird vorgeschlagen, dass von der Drehzahlregelung und der Blattwinkelvorsteuerung jeweils diejenige aktiv ist, die betragsmäßig die größere Stellgröße ausgibt, also den größeren einzustellenden Blattwinkel bzw. die größere einzustellende Verstellrate ausgibt. Auch hierzu wurde oben schon der Effekt erläutert, nämlich, dass die Blattwinkelvorsteuerung hierbei meist große Stellgrößen ausgibt, denn sie ist dafür ausgelegt, möglichst schnell vom ersten Arbeitspunkt zum Zielarbeitspunkt zu kommen. Sobald der Zielarbeitspunkt fast erreicht wurde bzw. aus Sicht der Vorsteuerung fast oder vollständig erreicht wurde, geht die Stellgröße, die die Blattwinkelvorsteuerung erzeugt, zurück, nämlich idealerweise auf null. Die Stellgröße der Blattwinkelvorsteuerung fällt dann also unter die Stellgröße der Drehzahlregelung, so dass die Drehzahlregelung hierdurch besonders zum Ende hin, also in der Nähe des Zielarbeitspunktes die Steuerung des Arbeitspunktes wieder übernimmt.

Besonders wird davon ausgegangen, dass der Veränderungsvorgang vom ersten Arbeitspunkt zum Zielarbeitspunkt so schnell geht, dass von im Wesentlichen konstanter Windgeschwindigkeit für diesen Vorgang ausgegangen werden kann. Tatsächlich wird die Windgeschwindigkeit natürlich nicht exakt gleich bleiben und die geringen Abweichungen die sich ergeben, können ebenfalls in der Nähe des Zielarbeitspunktes durch die Drehzahlregelung ausgeregelt werden.

Gemäß einem Aspekt wird vorgeschlagen, dass die Drehzahlregelung in Abhängigkeit von einer Drehzahlregelabweichung als Differenz zwischen der Istdrehzahl und einer Solldrehzahl einen Sollblattwinkel oder eine Sollverstellrate ausgibt. Dieser Sollblattwinkel bzw. dies Sollverstellrate können an die Blattwinkelsteuerung gegeben werden. Weiter wird vorgeschlagen, dass die Drehzahlregelung verändert oder ausgesetzt wird, während die Blattwinkelvorsteuerung den einzustellenden Blattwinkel bzw. die einzustellende Verstellrate unmittelbar vorgibt. Hier geht es besonders darum, dass die Drehzahlregelung währenddessen nicht oder allenfalls verändert aufgeschaltet wird. Der der Drehzahlregelung zugrundeliegende Algorithmus kann unverändert weiter ausgeführt werden und auch ein Drehzahlistwert kann zurückgeführt werden, denn der wird in der Gesamtbetriebsführung der Windenergieanlage ohnehin erfasst und liegt vor. Während die Blattwinkelvorsteuerung aktiv ist, soll die Drehzahlregelung aber nicht aktiv sein.

Wenn die Drehzahlregelung verändert ist, kann das bedeuten, dass sie über eine Gewichtung, also insbesondere mit einer Multiplikation von einem Wert kleiner als 0,5, aufgeschaltet wird und/oder dass sie in ihrer Parametrierung verändert wird. Insbesondere kann die Parametrierung dadurch verändert werden, dass eine Reglerverstärkung verringert wird bzw. eine Zeitkonstante der Drehzahlregelung erhöht wird, damit die Drehzahlregelung also nicht so hart bzw. nicht so schnell arbeitet, wie sonst. Dadurch könnte die Drehzahlregelung noch einen Beitrag leisten, geringe Abweichungen auszuregeln, wird aber daran gehindert, die Blattwinkelvorsteuerung allzu stark zu verändern.

Gemäß einem Aspekt wird vorgeschlagen, dass zum Ansteuern des Zielarbeitspunktes der Drehzahlregelung ein zeitlicher Verlauf einer Soll-Drehzahl vorgegeben wird und/oder zum Ansteuern des Zielarbeitspunktes der Leistungsregelung ein zeitlicher Verlauf einer Sollleistung vorgegeben wird. Dadurch kann der Verlauf vom ersten Arbeitspunkt zum Zielarbeitspunkt gezielter gesteuert werden, indem der Verlauf der Drehzahl bzw. der Verlauf der Leistung entlang der entsprechenden Verläufe geführt wird.

Gemäß einem Aspekt wird vorgeschlagen, dass während die Blattwinkelvorsteuerung den einzustellenden Blattwinkel bzw. die einzustellende Verstellrate unmittelbar vorgibt, die Drehzahlregelung in ihrer Parametrierung, insbesondere in wenigstens einem Verstärkungsfaktor verändert wird. Insbesondere wird ein solcher Verstärkungsfaktor verringert, um dadurch die Drehzahlregelung in ihrer Dominanz gegenüber der Blattwinkelvorsteuerung zu verringern. Hier wurde besonders erkannt, dass beim Verstellen des ersten Arbeitspunktes zum Zielarbeitspunkt dieser Verstellvorgang im Vordergrund steht und mit den beschriebenen Vorteilen durch die Blattwinkelvorsteuerung umgesetzt werden sollte.

Gemäß einem Aspekt wird vorgeschlagen, dass eine Blattwinkelveränderung vom ersten Blattwinkel zum Zielblattwinkel als relative Blattwinkelveränderung von 0 bis 100% beschreibbar ist, wobei 0% dem ersten Blattwinkel und 100% dem Zielblattwinkel entspricht. Die relative Blattwinkelveränderung kann auch als relativer Blattwinkelbereich synonym bezeichnet werden. Beträgt der erste Blattwinkel beispielsweise 10° und der Zielblattwinkel 60°, um nur ein anschauliches Beispiel zu wählen, entsprechen 0% den 10° und 100% den 60°. Eine Veränderung um einen Grad entspräche dann in diesem Beispiel genau 2%.

Weiter wird dazu vorgeschlagen, dass das Verstellen des Blattwinkels mittels der Blattwinkelvorsteuerung vom ersten Blattwinkel zum Zielblattwinkel vor Erreichen des Zielblattwinkels abgebrochen und/oder von der Drehzahlregelung übernommen wird. Die Blattwinkelvorsteuerung ist dann also nicht vollständig aktiv, sondern wird von der Drehzahlregelung vor Erreichen des Zielblattwinkels abgelöst.

Insbesondere wird vorgeschlagen, dass das Verstellen des Blattwinkels mittels der Blattwinkelvorsteuerung wenigstens für 5% bis 90%, insbesondere für 0% bis 95%, der Blattwinkelveränderung erfolgt und/oder die Drehzahlregelung währenddessen verändert oder deaktiviert wird. Um bei dem Beispiel der Verstellung von 10° bis 60° zu bleiben, wird das Verstellen des Blattwinkels mittels der Blattwinkelvorsteuerung, also wenigstens für 12,5° bis 55° ausgeführt, oder von 10° bis 57,5°. Währenddessen, also in diesem durch die Prozentwerte vorgegebenen Bereich, kann die Drehzahlregelung inaktiv und/oder verändert sein. Auch hier bedeutet, wenn sie inaktiv ist, dass ihre Stellgröße nicht aufgeschaltet wird. Wenn sie verändert wird, wird ihre Stellgröße geringer aufgeschaltet und/oder die Drehzahlregelung wird in ihrer Parametrierung verändert.

Gemäß einem Aspekt wird vorgeschlagen, dass zum Ansteuern des Zielarbeitspunktes eine aerodynamische Bremsleistung bestimmt wird, mit der der Rotor durch den Wind abgebremst werden soll, und der zeitliche Blattwinkel durch die Blattwinkelvorsteuerung so bestimmt wird, dass der Rotor die aerodynamische Bremsleistung an den Wind abgibt, wobei insbesondere die aerodynamische Bremsleistung in einem Bereich von 10% bis 120% der Nennleistung der Windenergieanlage gewählt wird, insbesondere im Bereich von 50% bis 100% der Nennleistung. Somit wird besonders vorgeschlagen, dass nicht nur die aerodynamische Leistung auf null gesteuert wird, sondern sogar auf einen negativen Wert, denn nun wird Leistung nicht mehr aus dem Wind aufgenommen, sondern sogar an ihn abgegeben. Die Rotorblätter werden also nicht nur so weit verstellt, dass sie keine Leistung mehr aus dem Wind entnehmen, sondern sie werden sogar noch weiter in ihrem Blattwinkel verstellt, sodass sie sogar Leistung an den Wind abgeben. Die aerodynamische Bremsleistung entspricht somit einer negativen aerodynamischen Leistung.

Die hierbei an den Wind abgegebene Leistung und damit die aerodynamische Bremsleistung kann 10% bis 120% der Nennleistung der Windenergieanlage betragen. Hier wurde besonders erkannt, dass mit 10% aerodynamischer Bremsleistung ein Wert gewählt wird, der einen erkennbaren Beitrag leisten kann. Die Bremsleistung wird besonders bis zu einem Bereich von 100% der Nennleistung vorgesehen, denn auf solche Werte, einschließlich der resultierenden mechanischen Belastungen, ist die Windenergieanlage ausgelegt. Da das Verstellen zum Zielarbeitspunkt ein möglichst kurzer Vorgang sein sollte, ist erkannt worden, dass die aerodynamische Bremsleistung sogar über der Nennleistung der Windenergieanlage liegen kann, insbesondere bis 120% davon. Ein Wert von wenigstens 50% zu wählen wird vorgeschlagen, damit die aerodynamische Bremsleistung einen signifikanten Anteil am Abbremsen des Rotors haben kann.

Gemäß einem Aspekt wird vorgeschlagen, dass zum Bestimmen des Zielarbeitspunktes eine Windgeschwindigkeit geschätzt wird, nämlich basierend auf der Drehzahl, der Leistung und dem ersten Blattwinkel, also des Blattwinkels des ersten Arbeitspunktes. Hier liegt besonders der Gedanke zugrunde, dass der erste Arbeitspunkt, in dem sich die Windenergieanlage befindet, wenn die Abregelungsanforderung vorgegeben wird, ein stationärer Arbeitspunkt ist, in dem die Windenergieanlage also in einem stationären Betrieb ist. Die Werte haben sich also alle eingeschwungen und dadurch kann aus ihnen auf die Windgeschwindigkeit zurückgeschlossen werden. Hier liegt ebenfalls die Annahme zugrunde, dass sich die Windgeschwindigkeit bis zum Erreichen des Zielarbeitspunktes nicht oder nicht stark verändern wird, so dass aus der Windgeschwindigkeit des ersten Arbeitspunktes die Windgeschwindigkeit bestimmt werden kann, von der angenommen wird, dass sie auch beim Zielarbeitspunkt zugrunde liegt. Der Zielarbeitspunkt und all die dazu beschriebenen Berechnungen, insbesondere modellbasierten Berechnungen und/oder Vorbestimmungen bzw. Vorberechnungen können damit auf einer solchen Windgeschwindigkeit aufbauen.

Gemäß einem Aspekt wird vorgeschlagen, dass in dem Zielarbeitspunkt die Drehzahl und/oder die Leistung größer als null ist. Insbesondere betrifft also das vorgestellte Verfahren zumindest gemäß einer bevorzugten Ausführungsform den Fall, dass die Abregelungsanforderung weder für die Leistung den Wert null angibt, noch für die Rotordrehzahl den Wert null vorgibt, sondern auch im Zielarbeitspunkt wird die Windenergieanlage noch betrieben, zumindest mit einer von null verschiedenen Drehzahl und einer von null verschiedenen Leistung.

Gemäß einem Aspekt wird vorgeschlagen, dass eine angestrebte Reduzierungszeit vorgegeben wird, innerhalb derer der Zielarbeitspunkt zu erreichen ist, und das Vorgeben des zeitlichen Blattwinkels in Abhängigkeit von der angestrebten Reduzierungszeit bestimmt wird, insbesondere unter Verwendung eines Modells bzw. des Modells, das vorbeschriebener modellbasierter Bestimmungen oder Berechnungen zugrunde liegt. Insbesondere kann der zeitliche Blattwinkelverlauf durch Vorgeben der Rotorbeschleunigung, also der Rotorabbremsung, in Abhängigkeit von der angestrebten Reduzierungszeit bestimmt werden bzw. daraus kann die Rotorbeschleunigung unmittelbar berechnet werden.

Gemäß einem Aspekt wird vorgeschlagen, dass nach Beenden des Verstellens des Blattwinkels mittels der Blattwinkelvorsteuerung die Drehzahlregelung die Drehzahl auf eine Solldrehzahl regelt oder begrenzt. Im Falle der Vorgabe einer reduzierten Drehzahl durch die Abregelungsanforderung ist dies die Solldrehzahl, auf die die Drehzahlregelung regelt.

Wird eine reduzierte Anlagenleistung durch die Abregelungsanforderung vorgegeben, kann abhängig von dieser vorgegebenen reduzierten Leistung die Solldrehzahl bestimmt werden und/oder es erfolgt ein Messen oder Beobachten der Windgeschwindigkeit und abhängig davon kann im Falle der Vorgabe einer reduzierten Anlagenleistung die Solldrehzahl bestimmt werden.

Gemäß einem Aspekt wird vorgeschlagen, dass dann, wenn eine Abregelungsanforderung vorliegt, geprüft wird, ob der Zielarbeitspunkt einen ausreichenden Abstand zum ersten Arbeitspunkt aufweist. Dazu wird weiter vorgeschlagen, dass das Verstellen des Blattwinkels mittels der Blattwinkelvorsteuerung nur durchgeführt wird, wenn der Abstand des Zielarbeitspunktes ausreichend ist. Ein ausreichender Abstand liegt dann vor, wenn der Abstand oberhalb eines vorbestimmbaren Vergleichsabstandes liegt.

Hierdurch wird erreicht, dass die vorgeschlagene Blattwinkelvorsteuerung zum Verändern des ersten Arbeitspunktes zum Zielarbeitspunkt nur verwendet wird, wenn dies auch einen Vorteil oder ausreichenden Vorteil gegenüber der Variante verspricht, den ersten Arbeitspunkt zum Zielarbeitspunkt einfach dadurch zu verändern, dass die geänderten Sollwerte, insbesondere der geänderte Drehzahlsollwert der Drehzahlregelung vorgegeben wird. Besonders die Drehzahlregelung ist bereits dazu geeignet, durch Vorgabe eines neuen Drehzahlsollwertes, der nämlich der Drehzahl des Zielarbeitspunktes entsprechen kann, die Veränderung vom ersten Arbeitspunkt zum Zielarbeitspunkt vorzunehmen. Es wurde aber erkannt, dass bei einer erheblichen Verstellung das Verwenden der Blattwinkelvorsteuerung vorteilhaft ist und angewendet werden soll, bei einer geringen Verstellung, wenn also erster Arbeitspunkt und Zielarbeitspunkt nah beieinanderliegen, kann das Verwenden der Blattwinkelvorsteuerung entbehrlich sein.

Insbesondere wird vorgeschlagen, dass als Abstand eine Differenz zwischen aktueller Drehzahl und Zieldrehzahl betrachtet wird und als ausreichend betrachtet wird, wenn er größer als eine vorgebbare Mindestdrehzahldifferenz ist, und/oder als Abstand eine Differenz zwischen aktueller Anlagenleistung und Zielleistung betrachtet wird und als ausreichend bewertet wird, wenn dieser Abstand größer als eine vorgebbare Mindestleistungsdifferenz ist. Außerdem oder alternativ wird vorgeschlagen, dass als Abstand eine Differenz zwischen erstem Blattwinkel und Zielblattwinkel betrachtet wird und als ausreichend bewertet wird, wenn er größer als eine vorgebbare Mindestwinkeldifferenz ist. Vorzugsweise beträgt die Mindestwinkeldifferenz wenigstens 10°, insbesondere wenigstens 20°. Die vorgebbare Mindestleistungsdifferenz beträgt insbesondere wenigstens 20% der Nennleistung der Windenergieanlage, insbesondere wenigstens 30% der Nennleistung der Windenergieanlage. Die Mindestdrehzahldifferenz beträgt vorzugsweise wenigstens 20% Nenndrehzahl und insbesondere wenigstens 40% Nenndrehzahl.

Gemäß einem Aspekt wird vorgeschlagen, dass eine Annäherung eines Flugtieres, insbesondere eines Vogels oder einer Fledermaus, zu einer Drehzahlanforderung als Abregelungsanforderung führt und die Drehzahl bestimmt wird in Abhängigkeit von einem Kriterium, mehreren Kriterien oder allen Kriterien aus der Liste, also Kriteriumsliste mit den Elementen:

- eine Position des Flugtieres,

- eine Art des Flugtieres,

- eine Bewegungsgeschwindigkeit des Flugtieres und

- eine Bewegungsrichtung des Flugtieres.

Hier wurde besonders erkannt, dass zum Schutz des zu schützenden Flugtieres eine möglichst schnelle Drehzahlreduzierung notwendig sein kann. Eine solche schnelle Reduzierung der Rotordrehzahl kann durch die Rotorblattvorsteuerung erreicht werden, und gegebenenfalls durch weitere vorstehend erläuterte Maßnahmen zum Reduzieren der Rotordrehzahl.

Zusätzlich wurde erkannt, dass nicht nur überprüft werden sollte, ob sich ein solches gefährdete Tier nähert, sondern auch in welcher Art und Weise es dies tut oder dies zu erwarten ist. Durch die Position des Flugtieres kann erkannt werden, wie nahe es schon der Windenergieanlage ist und daher wie dringend das Reduzieren der Drehzahl ist, und damit wie stark sie reduziert werden muss. Dafür wird vorgeschlagen, die Zieldrehzahl in Abhängigkeit von der Position des Flugtieres zu bestimmen.

Aus der Art des Flugtieres kann geschlossen werden, wie und wie schnell es sich der Windenergieanlage nähert. Aus der Art des Flugtieres kann auch geschlossen werden, ob eine Veränderung seiner Flugbahn zu erwarten ist, oder nicht. Auch das kann Einfluss darauf haben, ob und wie schnell sich das Flugtier der Windenergieanlage und damit einem Gefährdungsbereich der Windenergieanlage nähert, sodass das Vorgeben der Zieldrehzahl in Abhängigkeit von der Art des Flugtieres vorgeschlagen wird. Die Art des Flugtieres kann besonders kennzeichnen, ob es eine Fledermaus oder ein Vogel ist. Zusätzlich kann durch die Art des Flugtieres zwischen unterschiedlichen Fledermausarten und/oder unterschiedlichen Vogelarten unterschieden werden. Aus der Art des Flugtieres kann auf sein Verhalten geschlossen werden. Eine maximale und/oder typische Fluggeschwindigkeit kann abgeleitet werden, und daraus kann besser berechnet werden, wie schnell es sich der Windenergieanlage nähren wird. Aus der Art ist auch ableitbar, ob eher eine stetige oder unstetige Flugbahn zu erwarten ist.

Aus der Bewegungsgeschwindigkeit des Flugtieres, wenn diese zusätzlich erfasst wird, kann ebenfalls abgeleitet werden, wie schnell sich dieses Tier der Windenergieanlage nähert und entsprechend kann die Zieldrehzahl bestimmt werden. Es wird also vorgeschlagen, die Zieldrehzahl in Abhängigkeit von einer Bewegungsgeschwindigkeit des Flugtieres zu bestimmen.

Eine Bewegungsrichtung des Flugtieres kann Aufschluss darüber geben, ob sich dieses Flugtier weiter der Windenergieanlage und damit einem Gefahrenbereich der Windenergieanlage nähert, oder ob erwartet werden darf, dass das Flugtier an der Windenergieanlage vorbeifliegt. Somit wird vorgeschlagen, die Zieldrehzahl in Abhängigkeit von einer Bewegungsrichtung des Flugtieres vorzugeben.

Außerdem oder alternativ wird vorgeschlagen, ein Verhalten des Flugtieres weiter zu beobachten und in Abhängigkeit von dem beobachteten Verhalten des Flugtieres eine neue Zieldrehzahl vorzugeben. Hier wurde besonders erkannt, dass bei Erkennen eines zu schützenden Flugtieres, das sich der Windenergieanlage nähert, die Drehzahl nicht sofort auf einen so geringen Wert reduziert werden muss, bei dem eine Gefährdung des Flugtieres ausgeschlossen ist. Eine solche Drehzahl, die als Sicherheitsdrehzahl bezeichnet werden kann, und die sehr geringe Werte, wie beispielsweise 10% der Nenndrehzahl oder geringer aufweisen kann, sollte vorliegen, wenn das Flugtier im Bereich des Rotors der Windenergieanlage ist. Somit sollte sichergestellt werden, dass die Rotordrehzahl auf diese Sicherheitsdrehzahl abgesenkt werden kann, bevor das Flugtier den Bereich des Rotors erreicht.

Dafür kann die Rotordrehzahl etwas reduziert werden, wenn sich ein zu schützendes Flugtier der Windenergieanlage nähert, aber noch weit weg ist. Die Rotordrehzahl sollte dann auf einen Wert reduziert werden, der es ermöglicht, die Rotordrehzahl auf die Sicherheitsdrehzahl zu reduzieren, wenn das Flugtier weiterhin zur Windenergieanlage fliegt. Setzt das Flugtier seinen Flug zur Windenergieanlage aber nicht fort, so braucht die Rotordrehzahl auch nicht weiter reduziert zu werden.

Vereinfacht ausgedrückt kann die Rotordrehzahl umso kleiner gewählt werden, je näher das Flugtier der Windenergieanlage gekommen ist. Je näher das Flugtier der Windenergieanlage gekommen ist, umso kürzer ist die Zeit, die es brauchen würde, um die Windenergieanlage zu erreichen. Entsprechend ist die Zeit kürzer, die zur Verfügung steht, die Rotordrehzahl auf die Sicherheitsdrehzahl abzusenken. Entsprechend kann jeweils als Zieldrehzahl eine Drehzahl gewählt werden, die so niedrig ist, dass es möglich ist, noch rechtzeitig auf die Sicherheitsdrehzahl abgesenkt zu werden, sollte dies aufgrund des weiteren Verhaltens des Flugtieres notwendig sein.

Unterschiedliche Zieldrehzahlen in Abhängigkeit von dem weiteren Verhalten des Flugtieres, insbesondere in Abhängigkeit von dem Abstand des Flugtieres zur Windenergieanlage, können stufenweise vorgegeben werden. Beispielsweise kann in einer ersten Stufe, wenn sich das Flugtier der Windenergieanlage nähert, die Zieldrehzahl auf 80% Nenndrehzahl gesetzt werden und in einer zweiten Stufe, wenn sich das Flugtier der Windenergieanlage weiter nähert, auf 50% Nenndrehzahl gesetzt werden, um ein Beispiel zu nennen. Nähert sich das Flugtier dann noch weiter der Windenergieanlage, kann die Zieldrehzahl auf eine weitere Stufe, beispielsweise 30% Nenndrehzahl, gesetzt werden, oder auf die Sicherheitsdrehzahl.

Erfindungsgemäß wird auch eine Windenergieanlage vorgeschlagen. Diese Windenergieanlage ist an ein elektrisches Versorgungsnetz angeschlossen, weist einen Rotor mit in ihren Blattwinkel verstellbaren Rotorblättern auf, ist mit einer variablen Drehzahl betreibbar und ist zum Erzeugen einer Anlagenleistung aus Wind vorbereitet. Zum Verstellen der Blattwinkel weist sie eine Blattwinkelsteuerung auf, zum Regeln oder Begrenzen der Drehzahl weist sie eine Drehzahlregelung auf und zum Begrenzen der Anlagenleistung weist sie eine Leistungsregelung auf.

Die Windenergieanlage ist in einem vorgebbaren Arbeitspunkt betreibbar, wobei der Arbeitspunkt wenigstens durch die Drehzahl und die Anlagenleistung gekennzeichnet ist, vorzugsweise zusätzlich durch den Blattwinkel. Die Windenergieanlage ist dazu vorbereitet, ein Verfahren gemäß wenigstens einem vorstehend beschriebenen Aspekt auszuführen. Insbesondere weist die Windenergieanlage dazu eine Anlagensteuerung auf, in der ein solches Verfahren implementiert ist. Die Anlagensteuerung kann somit einen Prozessrechner aufweisen, in dem das Verfahren durch einen Programmcode hinterlegt ist.

Die Erfindung wird nun nachfolgend unter Bezugnahme auf die begleitenden Figuren exemplarisch näher erläutert.

**Figur 1**  zeigt eine Windenergieanlage in einer perspektivischen Darstellung.

**Figur 2**  zeigt schematisch eine Steuerungsstruktur mit einer angedeuteten Windenergieanlage.

**Figur 3**  zeigt ein Ablaufschema bei Vorgabe einer reduzierten Drehzahl als Abregelungsanforderung.

**Figur 4**  zeigt ein Ablaufschema bei Vorgabe einer reduzierten Leistung als Abregelungsanforderung.

**Figur 5**  zeigt eine Struktur zur Berechnung des Vorsteuerblattwinkels.

**Figur 6**  zeigt ein Diagramm mit einer gefilterten Sprunggröße.

**Figur 7**  zeigt Simulationsergebnisse eines angewandten Verfahrens.

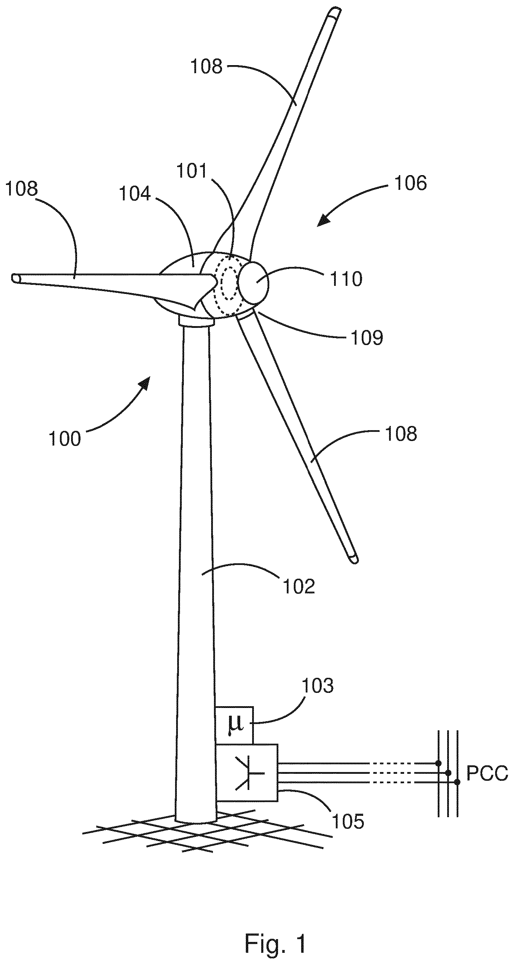

**Figur 1** zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Die Pitchwinkel, also Blattwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten.

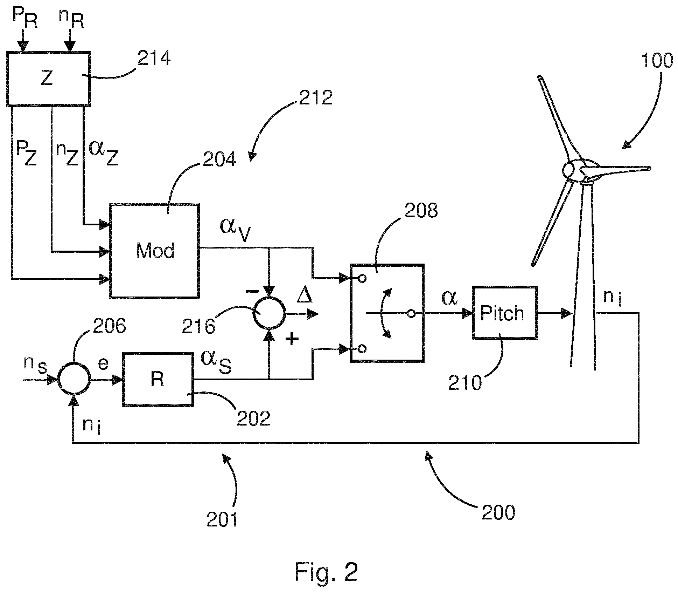

**Figur 2** zeigt eine Steuerungsstruktur 200, die insbesondere eine Drehzahlregelung 201 mit Reglerblock 202 aufweist und eine Blattwinkelvorsteuerung mit Modellbildungsblock 204. Im regulären Betrieb, wenn kein Wechsel von einem ersten Arbeitspunkt zu einem Zielarbeitspunkt vorgesehen ist, ist die Drehzahlregelung 201 aktiv. Sie arbeitet so, dass in der ersten Summierstelle 206 eine Differenz zwischen Solldrehzahl $n_S$ und Istdrehzahl $n_i$ gebildet wird. Diese Drehzahldifferenz bildet somit den Regelfehler e für die Drehzahl und der wird auf den Reglerblock 202 gegeben. Als Drehzahl wird hier und in der gesamten Beschreibung vereinfacht und damit auch synonym die Rotordrehzahl bezeichnet.

Der Reglerblock 202 setzt den Regelfehler e in eine Stellgröße um, nämlich einen Blattwinkelsollwert $\alpha_S$. Dieser Blattwinkelsollwert $\alpha_S$ wird dann unmittelbar über den Selektionsblock 208 unverändert weitergegeben. Die Bedeutung des Selektionsblocks 208 wird später noch beschrieben. Im Normalbetrieb, wenn in der Struktur der Figur 2 nur die Drehzahlregelung 201 aktiv ist, hat der Selektionsblock 208 keine Bedeutung und kann so angesehen werden, dass er den Blattwinkelsollwert $\alpha_S$ vom Reglerblock 202 einfach zur Blattwinkelsteuerung 210 weiterleitet. Die Blattwinkelsteuerung 210 ist hier nur schematisch angedeutet und sie führt das Verstellen des Blattwinkels, also der Blattwinkel aller Rotorblätter, durch. Dazu kann sie insbesondere entsprechende Pitchmotoren ansteuern, weswegen sie in der Steuerungsstruktur 200 der Figur 2 auch als "Pitch" bezeichnet ist. Dass die Blattwinkelsteuerung 210 somit auf die Rotorblätter einwirkt, ist dadurch angedeutet, dass ihr Ausgang zu der schematisch dargestellten Windenergieanlage 100 führt. Die Windenergieanlage 100 kann wie die Windenergieanlage 100 der Figur 1 ausgebildet sein.

Durch das Ansteuern der Windenergieanlage 100 und bedingt durch den Wind stellt sich eine Drehzahl ein, die als Istdrehzahl $n_i$ erfasst und zur Drehzahlregelung 201 zurückgeführt wird, nämlich zur ersten Summierstelle 206.

Um nach Erhalt einer Abregelungsanforderung den Betrieb der Windenergieanlage von einem ersten Arbeitspunkt zu einem Zielarbeitspunkt zu ändern, ist eine Blattwinkelvorsteuerung 212 vorgesehen. Ein wichtiges Element der Blattwinkelvorsteuerung ist der Modellbildungsblock 204. Der Modellbildungsblock 204 erhält insbesondere von dem Zielvorgabeblock 214 die Parameter, die den anzusteuernden Zielarbeitspunkt kennzeichnen, nämlich die Zielanlagenleistung $P_Z$, die Zieldrehzahl $n_Z$ und den Zielblattwinkel $\alpha_Z$. Der Zielvorgabeblock 214 erhält dafür die Abregelungsanforderung. Das kann somit eine reduzierte Anlagenleistung $P_R$ oder eine reduzierte Rotordrehzahl $n_R$ sein. Beide sind in Figur 2 als Eingangsgrößen für den Zielvorgabeblock 214 eingezeichnet, tatsächlich wird aber meist oder ausschließlich nur jeweils eine der beiden Größen vorgegeben werden.

Der Modellbildungsblock 204 bestimmt dann aus den Eingangsgrößen, die er erhalten hat, den vorzusteuernden Blattwinkel $\alpha_V$. Dazu kann er weitere Informationen erhalten, die in der Steuerungsstruktur der Figur 2 nicht dargestellt sind. Dazu gehört die aktuelle Windgeschwindigkeit, die er erhalten oder aus anderen Informationen bestimmen, insbesondere schätzen kann. Diese anderen Informationen können Informationen zum ersten Arbeitspunkt, von dem aus gestartet wird, sein, nämlich Anlagenleistung, Rotordrehzahl und Blattwinkel des ersten Arbeitspunktes, also des Startarbeitspunktes.

Außerdem kann der Modellbildungsblock 204 eine Rotorbeschleunigung als Eingangsgröße erhalten, oder sich berechnen. Außerdem kann er als Eingangsgröße eine einzustellende aerodynamische Leistung erhalten, oder sich berechnen.

Jedenfalls kann der Modellbildungsblock 204 ein Modell der Windenergieanlage, also ein Modell des Verhaltens der Windenergieanlage beinhalten und darauf aufbauend ein geeignetes Anlagenverhalten vorbestimmen und den Vorsteuerblattwinkel $\alpha_V$ ableiten.

Eine Möglichkeit der Umsetzung in dem Modellbildungsblock 204 besteht darin, dass eine Tabelle bzw. mehrere Tabellen hinterlegt sind. Eine solche Tabelle kann beispielsweise für verschiedene Windgeschwindigkeiten und verschiedene Zielarbeitspunkte geeignete Vorsteuerblattwinkel bzw. geeignete Verläufe für den Vorsteuerblattwinkel hinterlegt haben. Der erste Arbeitspunkt als Startarbeitspunkt kann dabei insbesondere als einer angenommen werden, der sich bei der jeweiligen Windgeschwindigkeit ergibt, wenn die Windenergieanlage noch keiner Abregelungsanforderung unterliegt.

Jedenfalls gibt der Modellbildungsblock 204 den Vorsteuerblattwinkel $\alpha_V$ aus, der an die Blattwinkelsteuerung 210 zur Umsetzung gegeben werden soll. Der Modellbildungsblock 204 kann dabei insbesondere kontinuierlich einen Blattwinkel ausgeben, der aber nur gesteuert wird, also nicht von etwaigen Rückführungen verändert wird, jedenfalls nicht von Drehzahlabweichungen. In einem Fall kann die Blattwinkelvorsteuerung 212 so arbeiten, dass als erfasste Werte nur Werte des ersten Arbeitspunktes, also des Startarbeitspunktes berücksichtigt werden, und weitere Werte vorbestimmt werden und/oder ein Verlauf des Vorsteuerblattwinkels vorbestimmt wird. Die Blattwinkelvorsteuerung 212 kann auch so arbeiten, dass sie den Vorsteuerblattwinkel ständig basierend auf dem jeweils aktuellen Arbeitspunkt der Anlage nachführt, also den Vorsteuerwinkel zu neuen Arbeitspunkten ständig neu berechnet.

Zusätzlich ist aber der Selektionsblock 208 vorgesehen, der entscheidet, ob der Sollblattwinkel $\alpha_S$ als Ausgang des Reglerblocks 202 oder der Vorsteuerblattwinkel $\alpha_V$ als Ausgang des Modellbildungsblocks 204 an die Blattwinkelsteuerung 210 als einzustellender Blattwinkel $\alpha$ gegeben wird. Der Selektionsblock 208 ist somit als Umschaltblock symbolisiert, der zwischen der Drehzahlregelung 201 und der Blattwinkelvorsteuerung 212 umschalten kann. Als Umschaltkriterium wird betrachtet, welche der beiden Stellgrößen von dem Sollblattwinkel $\alpha_S$ der Drehzahlregelung 201 und dem Vorsteuerblattwinkel $\alpha_V$ der Blattwinkelvorsteuerung 212 dem Betrage nach größer ist. Der Einfachheit halber ist in der Struktur der Figur 2 diese Betragsbildung nicht dargestellt.

Um diesen Größenvergleich zu bilden, ist die zweite Summierstelle 216 vorgesehen. An dieser zweiten Summierstelle 216 wird somit die Differenz der Beträge zwischen Sollblattwinkel $\alpha_S$ und Vorsteuerblattwinkel $\alpha_V$ gebildet. Abhängig von dieser Differenz, ob sie nämlich positiv oder negativ ist, schaltet dann der Selektionsblock 208 zum Sollblattwinkel $\alpha_S$ oder zum Vorsteuerblattwinkel $\alpha_V$.

Hier wird besonders erreicht, dass die Drehzahl normal weiterläuft, aber inaktiv ist, solange die Blattwinkelvorsteuerung 212 dominant ist, solange also ihr Vorsteuerblattwinkel $\alpha_V$ größer als der Sollblattwinkel $\alpha_S$ ist. Das ist dann der Fall, wenn die Differenz, die die zweite Summierstelle 216 ausgibt, negativ ist. Ist das aber nicht mehr der Fall, kann die Drehzahlregelung wieder übernehmen, und das wird besonders dann passieren, wenn der Zielarbeitspunkt fast erreicht ist.

Es wird darauf hingewiesen, dass die Vorgabe eines Sollblattwinkels $\alpha_S$ bzw. eines Vorsteuerblattwinkels $\alpha_V$ veranschaulichend in Figur 2 dargestellt ist. Alternativ kann auch statt eines Blattwinkels eine Verstellrate für den Blattwinkel ausgegeben werden. In dem Fall gibt der Reglerblock 202 statt des Sollblattwinkels $\alpha_S$ eine Sollverstellrate für den Blattwinkel aus. Ebenfalls gibt der Modellbildungsblock 204 dann statt des Vorsteuerblattwinkels $\alpha_V$ eine Vorsteuerverstellrate für den Blattwinkel aus. Diese Variante kann bevorzugt sein, weil sie dazu führt, dass der Drehzahlregler 201 ein integrierendes Verhalten aufweist, das eine stationäre Genauigkeit für die auszuregelnde Drehzahl erreicht, ohne dass dafür in dem Reglerblock 202 ein Integrator erforderlich ist. Besonders bei dieser Variante kann die Drehzahlregelung 201 ständig weiterlaufen, auch wenn die von ihr erzeugte Stellgröße temporär nicht verwendet wird.

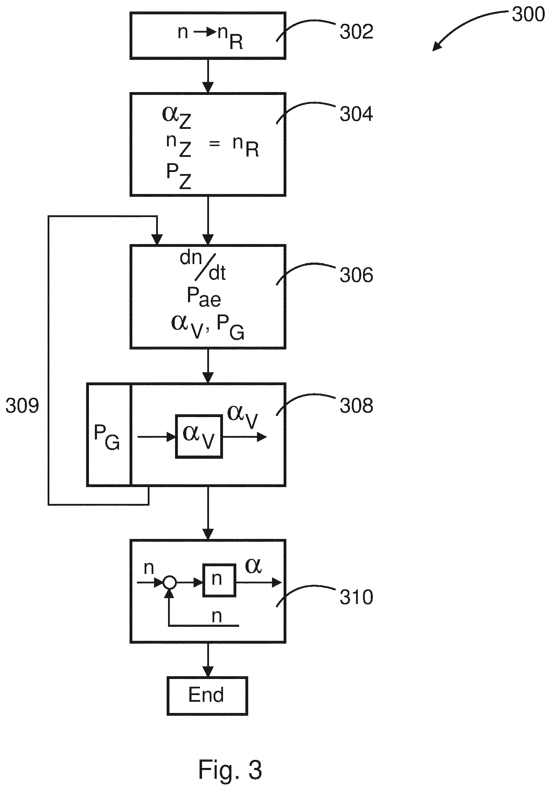

Das Ablaufdiagramm 300 der **Figur 3** erläutert einen Ablauf für den Fall, wenn als Abregelungsanforderung eine reduzierte Drehzahl, also eine Drehzahlanforderung vorgegeben wird. Dann wird im Startschritt 302 für die Drehzahl n die reduzierte Drehzahl $n_R$ vorgegeben. Dies wird an den Zielbestimmungsschritt 304 weitergegeben. Im Zielbestimmungsschritt 304 wird der Zielarbeitspunkt bestimmt und dazu die Werte für den Zielblattwinkel $\alpha_Z$, die Zielrotordrehzahl $n_Z$ und die Zielanlagenleistung $P_Z$ vorgegeben. Die Zielrotordrehzahl $n_Z$ entspricht dann der vorgegebenen reduzierten Drehzahl $n_R$.

Mit diesen Vorgabewerten setzt der Ablauf im Vorsteuerbestimmungsschritt 306 fort. Im Vorsteuerbestimmungsschritt 306 wird eine Rotorbeschleunigung, die dort als dn/dt symbolisiert ist, vorgegeben oder berechnet. Alternativ wird eine aerodynamische Leistung $P_{ae}$ vorgegeben bzw. berechnet. Darauf aufbauend wird der Vorsteuerblattwinkel $\alpha_V$ bestimmt, und der kann als absoluter Wert oder als Verlauf vorgegeben werden oder es kann stattdessen eine Verstellrate als Vorsteuerverstellrate vorgegeben werden. Der Vorsteuerblattwinkel, sein Verlauf bzw. die Vorsteuerverstellrate werden so vorgegeben, dass damit die aerodynamische Leistung $P_{ae}$ erreicht wird. Bei alledem wird im Vorsteuerbestimmungsschritt 306 außerdem eine Anlagenleistung $P_G$ berücksichtigt oder ebenfalls bestimmt.

Vorzugsweise wird die Anlagenleistung, alternativ das Generatormoment, solange der Zielarbeitspunkt noch nicht erreicht ist, so groß wie möglich vorgegeben, um das aerodynamische Abbremsen zu unterstützen. Die Anlagenleistung bzw. das Generatormoment wirken sich auf die Drehzahl des Rotors aus, wirken somit auf die Veränderung des Arbeitspunktes und können dadurch in das Bestimmen des Vorsteuerblattwinkels einwirken, wenn dieser abhängig vom aktuellen Arbeitspunkt ständig neu bestimmt wird. Ein solches Verhalten kann aber auch insgesamt vorberechnet sein, z.B. durch eine Simulation. Dann kann der Vorsteuerblattwinkel auch ohne ständige Erfassung des aktuellen Arbeitspunktes angepasst bzw. nachgeführt werden.

Der Vorsteuerbestimmungsschritt 306 kann insbesondere modellbasiert erfolgen, indem die genannten Größen basierend auf einem Modell bzw. einer Simulation bestimmt werden, oder zuvor bestimmt wurden und zur Verwendung in dem Vorsteuerbestimmungsschritt 306 in einem Speicher hinterlegt sind.

Der Ablauf setzt dann zum Vorsteuerschritt 308 fort. Im Vorsteuerschritt 308 wird die Vorsteuerung ausgeführt. Der Vorsteuerblattwinkel, bzw. sein Verlauf oder die Vorsteuerverstellrate werden ohne regelungstechnische Rückführung, besonders ohne Berücksichtigung einer Drehzahlabweichung, somit nur als Steuerung, an die Blattwinkelsteuerung weitergegeben. Das soll durch das Symbol in dem Block des Vorsteuerschritts 308 angedeutet werden. Gleichzeitig wird die ebenfalls in dem Vorsteuerbestimmungsschritt 306 berücksichtigte oder bestimmte Anlagenleistung $P_G$ umgesetzt. Dazu kann sie als Sollwert an einen entsprechenden Frequenzumrichter und/oder aktiven Gleichrichter oder andere Ansteuerung des Generators gegeben werden. Die Anlagenleistung $P_G$ wird hier mit dem Index G bezeichnet, um anzudeuten, dass sie auf den Generator wirkt und sich von der aerodynamischen Leistung $P_{ae}$ unterscheidet.

Der Vorsteuerbestimmungsschritt 306 und der Vorsteuerschritt 308 können ständig wiederholt werden, um den Vorsteuerwinkel ständig, also kontinuierlich oder in zeitlich kurzen Schritten neu zu bestimmen bzw. nachzuführen und dann auch anzuwenden, was durch eine entsprechende Wiederholschleife 309 angedeutet ist.

Während im Vorsteuerschritt 308 der Vorsteuerblattwinkel $\alpha_V$, bzw. sein Verlauf oder die Vorsteuerverstellrate vorgesteuert wird, ist eine Drehzahlregelung inaktiv. In der Nähe des Zielarbeitspunktes kann aber die Vorsteuerung zur Drehzahlregelung übergehen, und dafür geht das Ablaufdiagramm 300 vom Vorsteuerschritt 308 zum Drehzahlregelungsschritt 310 über. Im Drehzahlregelungsschritt 310 übernimmt dann die Drehzahlregelung wieder das Verstellen des Blattwinkels und dann erfolgt entsprechend auch wieder eine Rückführung, nämlich die Rückführung der Istdrehzahl. Hier liegen nur noch kleine Abweichungen vom Zielarbeitspunkt vor und die können am besten durch die Drehzahlregelung ausgeregelt werden. Der Zielarbeitspunkt ist dann erreicht und der Ablauf beendet.

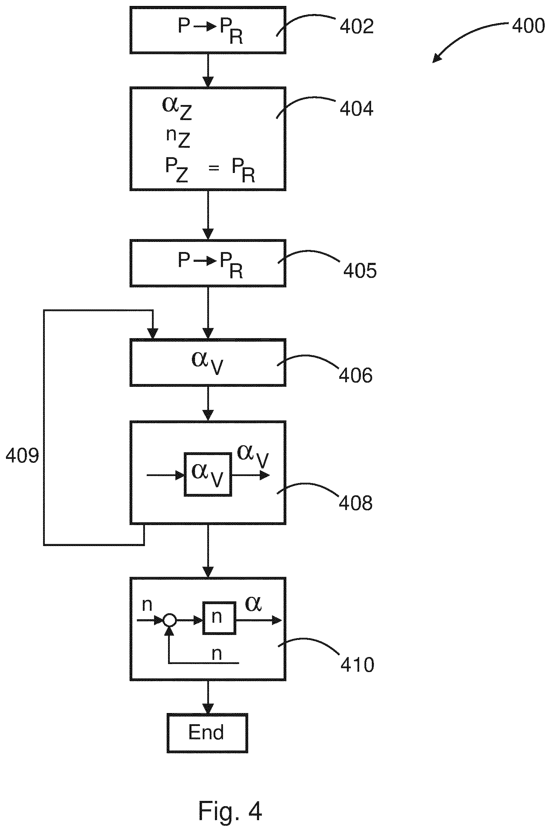

**Figur 4** zeigt ein Ablaufdiagramm 400, bei dem als Abregelungsanforderung eine Leistungsbegrenzung vorgegeben wird. Dies ist in dem Startschritt 402 dadurch symbolisiert, dass für die Leistung P eine reduzierte Leistung $P_R$ vorgegeben wird.

Das Verfahren geht dann zum Zielbestimmungsschritt 404 über, in dem der Zielarbeitspunkt definiert wird und dafür die Werte für den Zielblattwinkel $\alpha_Z$, die Zieldrehzahl $n_Z$ und die Zielleistung $P_Z$ bestimmt werden. Bei Vorgabe einer Drehzahlreduzierung als Abregelungsanforderung entspricht somit die Zielanlagenleistung $P_Z$ der reduzierten Leistung $P_R$.

Bei diesem Ablauf bei der Vorgabe einer reduzierten Leistung als Abregelungsanforderung wird die Anlagenleistung reduziert, insbesondere sofort bzw. möglichst schnell, was in dem Leistungsreduzierungsschritt 405 durchgeführt wird. Die Anlagenleistung wird also auf die reduzierte Leistung reduziert, insbesondere soweit bzw. so schnell dies technisch umsetzbar ist. Eine solche technische Umsetzung kann aber in einem Zeitraum von unter einer Sekunde oder zumindest wenigen Sekunden, wie maximal 5 Sekunden, durchgeführt werden. Besonders kann dies dadurch erfolgen, dass die in das elektrische Versorgungsnetz einspeisenden Wechselrichter sofort ihre Leistung auf die vorgegebene Leistung reduzieren. Wenn die Abregelungsanforderung aber eine langsamere Leistungsreduzierung zulässt, insbesondere in einem Bereich von maximal 5 Sekunden oder maximal 3 Sekunden, kann die Leistung entsprechend langsamer reduziert werden, bspw. über eine entsprechende lineare Abregelung, also über eine zeitliche Rampenfunktion.

Eine solche Abregelungsanforderung, bei der die Leistung reduziert werden soll, kann häufig eine Vorgabe eines Netzbetreibers sein und erfordert dabei ein entsprechend schnelles Handeln. Hierbei kann es sein, dass der Generator seine Leistung nicht so schnell reduzieren kann, wie die ins Netz eingespeiste Leistung reduziert wird. Der hierdurch kurzfristig entstehende Leistungsüberschuss kann in sogenannten Chopper-Widerständen verbraucht werden. Es kann auch oder alternativ sein, dass die Leistung, die der Generator erzeugt, schneller reduziert wird, als die aerodynamische Leistung, was zu einer Beschleunigung des Rotors führen kann.

Jedenfalls sollte versucht werden, so schnell wie möglich den Blattwinkel zum Zielblattwinkel zu verstellen und dafür wird im Vorsteuerbestimmungsschritt 406 zumindest der Vorsteuerblattwinkel $\alpha_V$ bestimmt. Die Bestimmung kann so durchgeführt werden, wie zum Vorsteuerbestimmungsschritt 306 der Figur 3 beschrieben wurde, wobei allerdings die Anlagenleistung den Wert der reduzierten Leistung von vornherein aufweist bzw. entsprechend der durchgeführten Abregelung aufweist, die bspw. unter Verwendung der erläuterten zeitlichen Rampenfunktion durchgeführt wurde.

Gemäß Ablaufplan 400 der Figur 4 geht der Ablauf im Vorsteuerschritt 408 weiter. Im Vorsteuerschritt 408 wird somit der Vorsteuerblattwinkel bzw. sein Verlauf oder eine Vorsteuerverstellrate direkt zur Blattwinkelsteuerung gegeben, um dort umgesetzt zu werden.

Wie zu Figur 3 erläutert, kann auch hier der Vorsteuerbestimmungsschritt 406 und der Vorsteuerschritt 408 ständig wiederholt werden, um den Vorsteuerwinkel ständig, also kontinuierlich oder in zeitlich kurzen Schritten neu zu bestimmen bzw. nachzuführen und dann auch anzuwenden, was durch eine entsprechende Wiederholschleife 409 angedeutet ist.

Auch hier wird vorgeschlagen, dass beim Erreichen des Zielarbeitspunktes oder kurz davor der Ablauf bzw. das Verfahren vom Vorsteuerschritt 408 zum Drehzahlregelungsschritt 410 übergeht. Also auch hier kann dann die Drehzahlregelung die Vorsteuerung ablösen, wenn der Zielarbeitspunkt erreicht oder fast erreicht ist. Das Verfahren zum Wechseln vom ersten Arbeitspunkt zum Zielarbeitspunkt ist damit abgeschlossen und die Drehzahlregelung kann, was auch für den Ablauf der Figur 3 gilt, den Betrieb der Windenergieanlage in diesem neuen Zielarbeitspunkt fortsetzen.

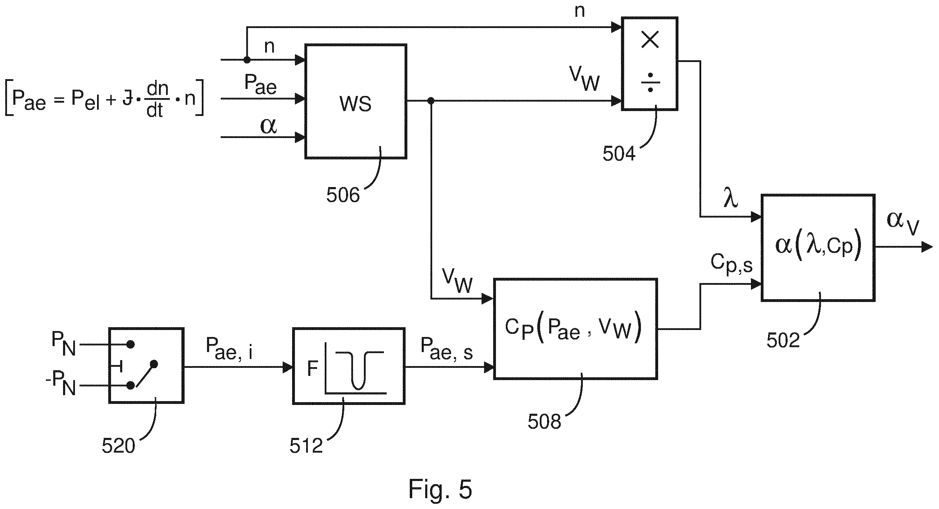

**Figur 5** zeigt eine Struktur 500 zum Bestimmen des Vorsteuerblattwinkels $\alpha_V$ gemäß einer Ausführungsform. Der Vorsteuerblattwinkel $\alpha_V$ kann dabei in dem Kennfeldblock 502 aus der aktuellen Schnelllaufzahl $\lambda$ und einem vorgegebenen Sollwert für den Leistungsbeiwert $C_{P,S}$ bestimmt werden. Dazu kann ein Kennfeld hinterlegt sein, das für den verwendeten Rotor einen Zusammenhang zwischen der Schnelllaufzahl $\lambda$, dem Leistungsbeiwert $C_P$ und dem Blattwinkel $\alpha$ angibt.

Die Schnelllaufzahl $\lambda$ ergibt sich aus der aktuellen Rotordrehzahl n, die in dem Quotientenblock 504 durch die aktuelle Windgeschwindigkeit $V_w$ geteilt wird. Die Drehzahl ist aus der Anlagensteuerung bekannt und die Windgeschwindigkeit könnte gemessen werden. Hier wird aber vorgeschlagen, die Windgeschwindigkeit $V_w$ zu schätzen, was durch den Schätzblock 506 angedeutet ist. Dadurch kann die Windgeschwindigkeit mit hoher Genauigkeit und wenig Rauschen erfasst werden.

Die Windschätzung erfolgt basierend auf der erfassten Rotordrehzahl n, der aktuellen aerodynamischen Leistung $P_{ae}$, also der Leistung, die aktuell aus dem Wind entnommen wird, und dem aktuell eingestellten Blattwinkel $\alpha$, der aus der Anlagensteuerung bekannt ist, die die Windenergieanlage insgesamt steuert.

Die aerodynamische Leistung $P_{ae}$ lässt sich aus der aktuell erzeugten elektrischen Leistung $P_{el}$ und dem Massenträgheitsmoment J des Rotors unter Berücksichtigung der Rotordrehzahl n und ihrer Änderung berechnen, nach der Formel: $P_{ae}=P_{el}+J*n*dn/dt$.

Der Windschätzer 506 kann aus diesen drei Größen die Windgeschwindigkeit über einen Zustandsbeobachter oder aus Erfahrungswerten bestimmen, die in einer Tabelle hinterlegt sein können.

Der Sollwert des Leistungsbeiwertes $C_{P,S}$, also der gewünschte und damit vorgegebene Leistungsbeiwert, wird aus der aktuellen Windgeschwindigkeit $V_w$ und einer vorgegebenen aerodynamischen Leistung $P_{ae,s}$ bestimmt. Das wird durch den $C_P$-Block 508 symbolisiert. In dem $C_P$-Block kann dazu ein Quotient aus der aerodynamischen Leistung $P_{ae}$ und einer der Windgeschwindigkeit $V_w$ zugeordneten Windleistung $P_w$ berechnet werden. Die vorhandene Windleistung $P_w$ in der Rotorfläche A des Rotors kann aus der Windgeschwindigkeit und der Luftdichte $\rho$ berechnet werden. Das lässt sich in eine Berechnung des vorzugebenden Leistungsbeiwertes $C_P$ umformen, und führt zu der Formel:

$$C_P=P_{ae}*2/(A*\rho*(V_w)^3)$$

Es wird vorgeschlagen, die aerodynamische Leistung $P_{ae}$ so zu wählen, dass sich auch nur realistische $C_P$-Werte ergeben können. Allerdings befindet sich die Windenergieanlage meist in Arbeitspunkten, bei denen von sich aus keine unrealistischen $C_P$-Werte zu erwarten sind. Schließlich soll die aerodynamische Leistung gegenüber dem aktuellen Arbeitspunkt reduziert werden, sodass kein zu großer $C_P$-Wert zu erwarten ist.

Wenn eine Leistungsvorgabe, also Leistungsreduzierung als Abregelungsanforderung vorgegeben wird, kann der Sollwert der aerodynamischen Leistung $P_{ae,s}$ auf den Wert der Leistungsvorgabe, also der abzuregelnden Anlagenleistung gesetzt werden, was der Zielanlagenleistung entsprechen kann. Es ist auch möglich, zunächst eine geringere aerodynamische Leistung vorzugeben, z.B. mit dem Wert null.

Wenn die Windenergieanlage aber sehr schnell abgebremst werden soll, wenn also die Abregelungsanforderung eine Drehzahlvorgabe, also eine Drehzahlreduzierung ist, besonders um einen Vogel- oder Fledermausschutz zu gewährleisten, kann eine dem Betrag nach sehr hohe aerodynamische Leistung vorgegeben werden. also eine sehr große aerodynamische Bremsleistung.

Um die Windenergieanlage aber nicht zu überlasten, wird vorgeschlagen, die aerodynamische Leistung $P_{ae,s}$ auf die negative Nennleistung $P_N$ der Windenergieanlage zu setzen.

Das soll durch den Aufschaltblock 510 veranschaulicht werden. Der Aufschaltblock 510 schaltet somit von einem vorherigen Wert, der maximal bei $+P_N$ gelegen haben kann, auf $-P_N$ und gibt dies als Idealbremsgröße, bei der gezeigten Ausführungsform somit als ideale aerodynamische Leistung $P_{ae,i}$ aus. Dieser ideale Wert ist somit ein Sprungwert, der aber zur Anregung der ersten Turmschwingung führen kann, sodass vorgeschlagen wird, ihn zunächst über die Filterfunktion 512 zu führen. Die Filterfunktion 512 ist als Bandstoppfilter ausgeführt und filtert eine Frequenzkomponente heraus, die eine erste Turmeigenfrequenz anregen könnte. Das Ergebnis ist der gefilterte Sollwert für die aerodynamische Leistung $P_{ae,s}$.

Bei einer solchen Vogelschutzanwendung, die auch ein Vogelschutzstopp des Rotors sein kann, wird somit ein Blattwinkel angefordert, der die Windenergieanlage mit negativer Nominalleistung aerodynamisch bremst. Aus diesem sprunghaften Signal wird die 1. Turmeigenfrequenz herausgefiltert, um eine Turmanregung zu vermeiden.

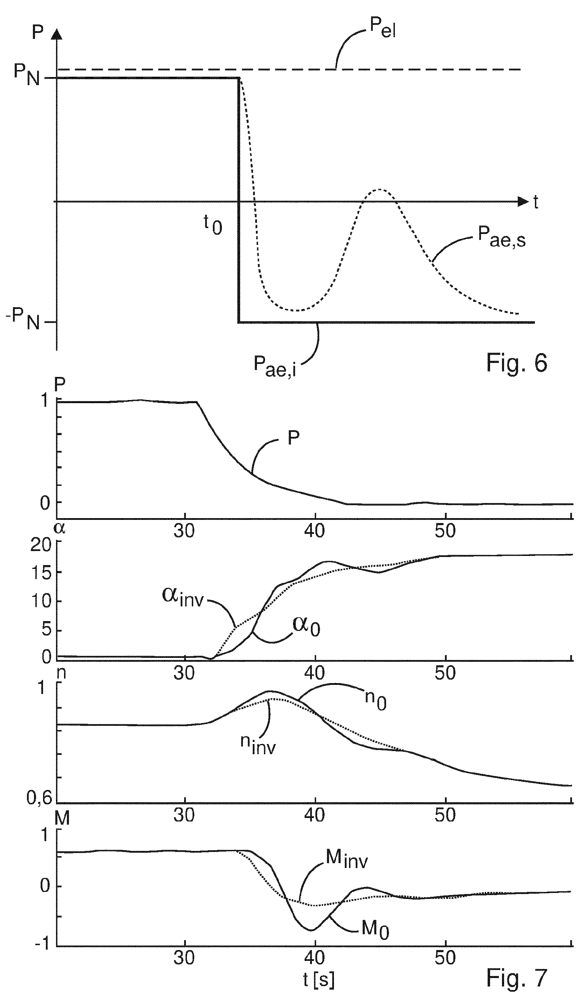

Die Wirkung des Vorgebens der idealen aerodynamischen Leistung durch den Aufschaltblock 510, oder generell einer Idealbremsgröße, und des Filterns mit der Filterfunktion 512 ist in der **Figur 6** veranschaulicht.

Figur 6 zeigt dabei ein Zeitdiagramm, in dem die elektrische Leistung $P_{el}$, die aerodynamische Sollleistung $P_{ae,s}$ und die ideale aerodynamische Leistung $P_{ae;i}$ dargestellt sind. Zum Zeitpunkt $t_0$ erfolgt die Abregelungsanforderung. Bis dahin sind die elektrische Leistung $P_{el}$ und die aerodynamische Leistung $P_{ae}$ ausgeglichen. Die geringen Unterschiede der Kurven sind nur zeichnerisch bedingt.

Zum Zeitpunkt $t_0$ erfolgt dann die sprunghafte Vorgabe der idealen aerodynamischen Leistung $P_{ae,i}$, die von $P_N$ auf $-P_N$ wechselt. Durch die Filterung wird aber dieser negative Sprung abgeändert, sodass sich der veränderte Verlauf der vorzugebenden aerodynamischen Leistung $P_{ae}$ ergibt, deren Verlauf aber eher symbolisch zu verstehen ist. Allerdings sollte er sich nach einiger Zeit asymptotisch dem Endwert des idealen Funktionsverlaufs nähern. Die aerodynamische Leistung $P_{ae}$ ist somit nicht abgeschwächt, nur anfangs in ihrem Verlauf verändert, um eine Anregung einer Turmschwingung zu vermeiden.

**Figur 7** zeigt die Simulation eines Abregelungsvorgangs nahe Nennwind. Dabei ist mit dem Index "0" die Reaktion einer Anlage dargestellt, welche lediglich eine klassische Feedbackregelung nutzt, und mit dem Index "inv" die Reaktion einer Anlage, welche durch die beschriebene Vorsteuerung auf die Abregelungsanforderung reagiert.

- Das oberste Subdiagramm zeigt den auf Nennleistung normierten Verlauf der Leistungseinspeisung P. Er ist für beide Fälle gleich.

- Das zweite Subdiagramm zeigt den Blattwinkelverlauf, der auch als Pitchwinkelverlauf bezeichnet werden kann. Der Verlauf $\alpha_{inv}$ zeigt eine deutlich frühere Reaktion als der Verlauf $\alpha_0$, was die Vorteile einer Vorsteuerung unterstreicht.

- Das dritte Subdiagramm zeigt den sich aus Leistungsabnahme und Pitchwinkelverlauf ergebenden auf eine Nenndrehzahl normierten Rotordrehzahlverlauf. Deutlich wird, dass der Drehzahlanstieg durch das frühere Herauspitchen bei $n_{inv}$ vermindert wird im Vergleich zum Verlauf $n_0$.

- Das vierte Subdiagramm zeigt die auf ein Maximalmoment normierte Turmfußbelastung als Drehmoment $M_0$ bzw $M_{inv}$. Deutlich wird, dass durch das frühzeitige Herauspitchen kein nennenswertes Überschwingen auftritt.

Nachfolgend werden weitere Aspekte, Überlegungen und Effekte der Erfindung beschrieben.

Es wurde erkannt, dass Anwendungsfälle schneller Drehzahl- oder Leistungsreduktionen, insbesondere aerodynamischer Leistungsreduktion bei minimaler mechanischer Belastung vielfältig sind.

Zum Beispiel können Vogelschutzerkennungssysteme zum rechtzeitigen Stopp bzw. zur rechtzeitigen Drehzahlreduktion eingesetzt werden, um einen Beitrag zum Artenschutz zu leisten. Dieser Ansatz reduziert allerdings bei erkanntem Vogelkontakt den Ertrag, bzw. kann sogar zu einer unzulässigen mechanischen Belastung der WEA führen, wenn die Stopps zu zahlreich, oder zu stark bzw. schnell sind.

Ein weiteres Beispiel ist die schnelle oder gar sprunghafte Reduktion der elektrischen Maximalleistung z.B. seitens eines Netzbetreibers. Während das elektrische System die Einspeiseleistung schnell, meist in einer Zeit unter einer Sekunde, reduzieren kann, findet die Reduktion der aerodynamischen Leistung langsamer, durch das Verfahren der Blätter statt. Ist dieser Vorgang zu *langsam*, so entsteht ggf. eine Überdrehzahl, was eine hohe mechanische Belastung der WEA zur Folge haben kann. Andererseits hat auch ein zu *schnelles* Verfahren der Rotorblätter seine Gefahren. Es ist weithin bekannt, dass sich dadurch der Rotorschub umkehren kann, und so die Gondel unzulässig weit nach vorne schwingt. Dies führt ebenso zu einer unzulässigen mechanischen Belastung und wird durch die schnelle Leistungsreduktion noch verstärkt.

Allen Anwendungsfällen ist gemeinsam, dass die über die Rotorblätter aufgenommene aerodynamische Leistung so schnell wie möglich reduziert wird, wobei die Belastung der WEA so gering wie möglich sein soll. Hierbei geht es sowohl um Betriebs- wie auch um Extremlasten.

Warum die aerodynamische Leistung reduziert werden soll, hängt vom Anwendungsfall ab. Beim Vogelschutz, der auch allgemeiner als Artenschutz bezeichnet werden kann, geht es darum, die Drehzahl unter einen Schwellwert zu regeln, der für Vögel oder Fledermäuse keine Gefahr bedeutet. Hier kann zusätzlich der Generator verwendet werden, indem gleichzeitig zur Reduzierung der aerodynamischen Leistung das Generatormoment oder die Generatorleistung angehoben wird, soweit es geht.

Bei Maximalleistungsbegrenzungen geht es primär darum, die aerodynamische Leistung schnellstmöglich an die verbleibende Einspeiseleistung des Generators anzupassen.

Es geht somit besonders um eine lastschonende Reduzierung der Rotordrehzahl einer Windenergieanlage, wobei Notstopp-Situationen nicht umgesetzt werden.

Die Erfindung verbessert u.a. die Drehzahlreduzierungszeit für Vogelschutzereignisse.

Die Erfindung vermeidet erhöhte Lasten, die besonders durch Überdrehzahlen oder verspätetes bzw. unabgestimmtes Regelverfahren entstehen können, bei Maximalleistungsreduzierungen.

Bisher wurde bei Vogelschutzereignissen die Anlage langsam gestoppt. Dies ist zwar lastschonend, nimmt jedoch mehr Zeit in Anspruch, und setzt dadurch Vogelerkennungen in einem größeren Umkreis um die Anlage voraus. Es führt auch zu einer zu frühen Abregelung der Windenergieanlage.

Bei Abregelungen wurden bisher Überdrehzahlen und Turmlasten in Kauf genommen, aufgrund der Erwartung, dass diese Ereignisse weder extremlastrelevant noch maßgeblich betriebslastrelevant sind. Dazu wird nun eine Verbesserung vorgeschlagen.

Es wird insbesondere Eine Lösung vorgeschlagen, die eine Durchführung einer schnellstmöglichen Rotordrehzahlreduktion erreicht, bei der keine oder keine signifikanten höheren Turmfußlasten auftreten als bei einer langsameren Rotordrehzahlreduktion.

Unabhängig vom Anwendungsfall wird eine Umsetzung einer schnellen, aber lastschonenden Drehzahl- oder Leistungsreduktion erfindungsgemäß sehr ähnlich ausgeführt. Es geht darum, den Blattwinkel so schnell wie möglich in den neuen gewünschten Gleichgewichtszustand zu bringen, insbesondere zum Zielblattwinkel, aber möglichst nicht darüber hinaus. Ein geschlossener Regelkreis läuft immer Gefahr bei zu starker Einstellung überzuschießen. Bei zu schwacher Einstellung ist das System zu langsam.

Es findet deshalb erfindungsgemäß eine Vorsteuerung statt, bei der ein Blattwinkel vorgegeben und angesteuert wird, der vorberechnet wird. Dieser Winkel, der den Zielblattwinkel bildet, wird anhand eines mathematischen Modell der Windenergieanlage so berechnet, dass die Windenergieanlage, die vereinfachend und synonym auch als Anlage bezeichnet werden kann, nach Erreichen dieses Winkels die aerodynamische Zielleistung aufnimmt. Ideal kann, als Zielblattwinkel maximal schnell angefahren werden, er kann als Idealblattwinkel vorberechnet werden. Nach Erreichen dieses Winkels wird das Verfahren gestoppt, bzw. es bleibt nur der geschlossene Regelkreis weiter aktiv bzw. die Anlagensteuerung verwendet dann wieder den geschlossenen Regelkreis, nämlich die Drehzahlregelung.

Es wird gemäß einem Aspekt vorgeschlagen, zusätzlich Parameter des geschlossenen Regelkreises, also der Drehzahlregelung anzupassen. Besonders wird vorgeschlagen, eine Reglerverstärkung der Drehzahlregelung zu erhöhen, während der Blattwinkel zum Zielblattwinkel hin verändert wird. Dadurch kann der Zielblattwinkel schneller angesteuert werden, wenn die Drehzahlregelung zwischenzeitlich aktiviert wird.

Da Vorsteuerungen immer auf Annahmen zur Regelstrecke basieren, können Ungenauigkeiten bestehen.

Es wird daher gemäß einem Aspekt vorgeschlagen, die Vorsteuerung deshalb auch bereits dann zu beenden, wenn der angestrebte Zustand *in etwa* erreicht ist, besonders basierend auf der Differenz zwischen Zielblattwinkel oder Idealblattwinkel und aktuellem Blattwinkel. Dies kann, muss aber nicht so gemacht werden. Der geschlossene Regelkreis kann deshalb stets aktiv bleiben, ohne aber aufgeschaltet zu werden. Insbesondere dann, wenn die Vorsteuerung tatsächlich deaktiviert wird, ist das sinnvoll. Um in diesen Situationen weiterhin ein schnelle Regelverhalten zu erreichen, wird vorgeschlagen, den geschlossenen Regelkreis anzupassen, der ansonsten für den normalen Betrieb ausgelegt ist.

Da die Vorsteuerung nicht kontinuierlich aktiv ist, sondern nur in den o.g. Anwendungsfällen, besteht ein vorgeschlagener Ablauf aus den folgenden Schritten:

1. Erkennung des Anwendungsfalls, nämlich der Abregelungsanforderung, insbesondere begrenzte Maximalleistung oder Vogelschutz.
2. Erkennung des Bedarfs einer Vorsteuerung, nämlich Prüfung, ob der neue Arbeitspunkt, also der Zielarbeitspunkt, so weit vom aktuellen Zustand, also dem aktuellen bzw. ersten Arbeitspunkt, entfernt ist, dass ein Vorsteuereingriff lohnenswert erscheint, oder ob die Drehzahlregelung ausreicht.
3. Aktivierung der Vorsteuerung, d.h. gezieltes Anfahren eines Blattwinkels, nämlich des Zielblattwinkels, bei dem die angestrebte aerodynamische Leistung aufgenommen bzw. abgegeben wird.
4. Ggf. Anpassung der Parameter des geschlossenen Regelkreises, insbesondere der Drehzahlregelung.
5. Deaktivieren der Vorsteuerung, sobald der neue Arbeitspunkt insbesondere die zugehörige neue Drehzahl ungefähr erreicht ist.
6. Ggf. Anpassung der Regelparameter des Drehzahlreglers rückgängig machen.

Je nach Anwendung können weitere Schritte oder Aspekte hinzukommen.

Für den Vogelschutz, der hier repräsentativ für den Artenschutz steht, insbesondere einen Fledermausschutz einschließt, ist Folgendes zu bemerken:
Beim Vogelschutz kann im Zielzustand, in dem der Rotor langsam drehen soll, beinahe steht, gar keine aerodynamische Leistung mehr aufgenommen werden. Die vorliegende Erfindung konzentriert sich zum Vogelschutz aber auf den transienten Drehzahlabbauvorgang, während dem aerodynamisch Leistung abgegeben wird, bzw. "negative Leistung" aufgenommen wird. Hier geht es darum die aerodynamische Leistung schnell abzusenken, damit eine risikoarme Rotordrehzahl erreicht wird. Praktisch wird eine aerodynamische Leistung so gewählt, dass der Rotor innerhalb einer angestrebten Zeit ausreichend verzögert wird, ohne die WEA mechanisch zu überlasten. Zum Beispiel kann die aerodynamische Leistung dem negativen Wert der maximalen positiven aerodynamischen Leistung im normalen Betrieb entsprechen. Konkret kann etwa für eine beispielhafte Anlage mit +4.2 MW Nennleistung eine aerodynamische Verzögerungsleistung von z.B. -4.2MW parametriert werden, sofern das Rotorblatt in positive und negative Schubrichtung gleiche Belastungen aufnehmen kann.

Aufgrund des Zusammenhangs $d\omega/dt = J * \Delta M$ ist so auch die ungefähre Verzögerungszeit bekannt, solange $\Delta M$ auch das Generatormoment beinhaltet. Alternativ wird vorgeschlagen, dass die angestrebte Verzögerungszeit als eine Vorgabe für die Berechnung der aerodynamischen Leistung verwendet wird.

Um zu jedem Zeitpunkt eine aerodynamische Leistung, und zusammen mit der Generatorleistung eine Verzögerungsleistung, vorzusteuern, wird für die Berechnung des Idealblattwinkels die Ist-Drehzahl bzw. Ist-Schnelllaufzahl angesetzt.

Da die Veränderung der aerodynamischen Leistung zu einer Änderungsgeschwindigkeit der Drehzahl führt, wird vorgeschlagen, ein entsprechendes Deaktivierungskriterium zu definieren. Zum Beispiel, dass die Solldrehzahl ungefähr (siehe oben Punkt 5, "Deaktivierung der Vorsteuerung") erreicht wurde. Es kommt aber auch in Betracht, die Vorsteuerung vorher zu stoppen. Es könnte eine Vorsteuerung aufgrund von Modelunsicherheiten über das Ziel hinausschießen. Das könnte hinsichtlich Drehzahl bzw. Vogelschutz unbedenklich sein. Allerdings könnte der Turm zu sehr belastet werden, und zwar zum einen in seiner Extremlast, besonders wenn der Schub zu negativ wird, und zum anderen in seiner Betriebslast, besonders wenn eine aerodynamische Dämpfung durch große Blattwinkel zu klein geworden ist. Daher wir in solchen Fällen vorgeschlagen, die Vorsteuerung vorher zu stoppen, und den restlichen Regelfehler mit dem geschlossenen Regelkreis zu regeln, wobei der geschlossene Regelkreis aber in seiner Dynamik der Situation angepasst wurde (siehe oben Punkt 4, "Ggf. Anpassung der Parameter").

Zum Einregeln einer Zielrotordrehzahl in lastunkritischen Zuständen (siehe oben Punkt 4, "Ggf. Anpassung der Parameter") ist Folgendes zu bemerken:

Insbesondere für die Anwendung Vogelschutz ist zügiges Einregeln einer Solldrehzahl auch in Situationen erforderlich, in denen der Schub bereits lastschonend abgebaut wurde. Dies ist typischerweise ab Blattwinkel von 20° der Fall. Es bietet sich eine weitere Anpassung der Parameter des geschlossenen Regelkreises an für den Zeitraum zwischen dem Verlassen des Bereiches lastkritischer Arbeitspunkte bis zum Erreichen der angestrebten Zieldrehzahl. Für diesen Abschnitt des Rotordrehzahlabbaus kommen deutlich höhere Rückführverstärkungen in Frage, als für lastrelevante Arbeitspunkte, z.B. eine Vervierfachung.

Für Reduktion der Maximalleistung als Abregelungsanforderung ist Folgendes zu bemerken:

Bei der Vorsteuerung einer Maximalleistung kann die aerodynamische Leistung direkt so gesetzt werden, dass sie dem neuen Wuncharbeitspunkt entspricht, also der durch die Abregelungsanforderung vorgegebenen, neuen Maximaleinspeiseleistung zzgl. vom Generator zu kompensierender Verlustleistungen, die in vorstehenden Überlegungen und Beschreibungen vernachlässigt wurden. Bei der Berechnung des Idealblattwinkels, gibt es hier deshalb eine Abweichung zum Vogelschutz-Anwendungsfall. Während dort die Ist-Drehzahl verwendet wurde, sollte hier, bei Vorgabe einer Leistungsreduzierung, die Zieldrehzahl, also die neue Solldrehzahl des neuen Arbeitspunktes, angesetzt werden. So steuert die Anlage direkt in den neuen Arbeitspunkt.

Eine Vorsteuerung einer Transiente zur Drehzahlabsenkung wird gemäß einer Ausführungsform vorgeschlagen.

## Patentansprüche

1. Verfahren zum Steuern einer an ein elektrisches Versorgungsnetz angeschlossenen Windenergieanlage (100), die einen Rotor (106) mit in ihrem Blattwinkel verstellbaren Rotorblättern (108) aufweist, mit einer variablen Drehzahl betreibbar ist und zum Erzeugen einer Anlagenleistung ($P_G$) aus Wind vorbereitet ist, wobei

   - zum Verstellen der Blattwinkel eine Blattwinkelsteuerung (210) vorgesehen ist,
   - zum Regeln der Drehzahl eine Drehzahlregelung (201) vorgesehen ist,
   - zum Begrenzen der Anlagenleistung ($P_G$) eine Leistungsregelung vorgesehen ist, und
   - die Windenergieanlage (100) in einem vorgebbaren Arbeitspunkt betreibbar ist, wobei der Arbeitspunkt wenigstens durch die Drehzahl und die Anlagenleistung ($P_G$) gekennzeichnet ist

   umfassend die Schritte

   - Betreiben der Windenergieanlage (100) in einem ersten Arbeitspunkt mit einem ersten Blattwinkel,
   - Prüfen auf eine Abregelungsanforderung, bei der eine Reduzierung der Drehzahl und/oder Anlagenleistung ($P_G$) angefordert wird, und
   - wenn eine Abregelungsanforderung vorliegt,

      - Bestimmen eines neuen Arbeitspunktes als Zielarbeitspunkt in Abhängigkeit von der Abregelungsanforderung, wobei der Zielarbeitspunkt durch eine Zieldrehzahl ($n_Z$) und eine Zielanlagenleistung ($P_Z$) gekennzeichnet ist, und
      - Bestimmen eines Blattsollwinkels als Zielblattwinkel ($\alpha_Z$) für den Zielarbeitspunkt, wobei
      - zum Verändern des Blattwinkels zum Zielblattwinkel ($\alpha_Z$) ein Vorsteuer-Blattwinkel, oder eine Vorsteuer-Verstellrate, die eine Verstellrate des Blattwinkels beschreibt, über eine Blattwinkelvorsteuerung (212) vorgegeben wird, wobei
      - die Blattwinkelvorsteuerung (212) den Vorsteuer-Blattwinkel bzw. die Vorsteuer-Verstellrate unmittelbar zur Umsetzung an die Blattwinkelsteuerung (210) gibt.

2. Verfahren nach Anspruch 1, **dadurch gekennzeichnet, dass**

   - die Vorsteuerung den Vorsteuer-Blattwinkel bzw. die Vorsteuer-Verstellrate

      - unabhängig von einer Drehzahlabweichung als Abweichung einer erfassten Drehzahl von einer vorgegebenen Drehzahl vorgibt, und/oder
      - unabhängig von der erfassten Drehzahl und unabhängig von der erfassten Anlagenleistung ($P_G$) vorgibt und/oder

   - unabhängig von der Drehzahlregelung (201) und unabhängig von der Leistungsregelung vorgibt, und insbesondere
   - das Verändern des Blattwinkels vom ersten Blattwinkel zum Zielblattwinkel ($\alpha_Z$) vollständig oder überwiegend durch die Vorsteuerung vorgegeben wird.

3. Verfahren nach Anspruch 1 oder 2, **dadurch gekennzeichnet, dass**

   - als Zielblattwinkel ($\alpha_Z$) ein Idealblattwinkel bestimmt wird, der bei stationären Bedingungen am Zielarbeitspunkt zur Zieldrehzahl ($n_Z$) und Zielleistung ($P_Z$) führt, und/oder
   - die Vorsteuerung einen festen Blattwinkel oder einen fest vorgegebenen zeitlichen Blattwinkelverlauf als den Vorsteuer-Blattwinkel bzw. eine feste Verstellrate als die Vorsteuer-Verstellrate vorgibt, und/oder
- der Vorsteuer-Blattwinkel bzw. die Vorsteuer-Verstellrate unter Verwendung eines Modells bestimmt wird, das ein Verhalten der Windenergieanlage (100) abbildet, und/oder dass
- für den Zielarbeitspunkt eine Zielschnelllaufzahl als den Zielarbeitspunkt kennzeichnende Schnelllaufzahl ($\lambda$) vorgesehen ist, und
- der Zielblattwinkel ($\alpha_Z$) so bestimmt wird, dass sich beim Zielarbeitspunkt die Zielschnelllaufzahl bei stationären Bedingungen einstellt.

4. Verfahren nach einem der vorstehenden Ansprüche, **dadurch gekennzeichnet, dass**

- eine Abregelungsanforderung ausgewählt ist aus der Liste aufweisend:

    - eine Drehzahlanforderung als Anforderung einer Drehzahlabsenkung, insbesondere zum Schutz eines sich nähernden Tiers, insbesondere eines Vogels oder einer Fledermaus, wobei die Drehzahlanforderung insbesondere eine konkrete Zieldrehzahl ($n_Z$) der Höhe nach vorgibt, und
    - eine Leistungsanforderung als Anforderung einer Absenkung der Anlagenleistung ($P_G$), insbesondere zur Stützung des elektrischen Versorgungsnetzes, wobei die Leistungsanforderung insbesondere eine konkrete Zielleistung ($P_Z$) der Höhe nach vorgibt, und/oder dass

- im Falle einer Leistungsanforderung als Abregelungsanforderung

    - für die Anlagenleistung ($P_G$) eine Maximalleistung vorgegeben wird,
    - die aktuelle Anlagenleistung ($P_G$), sofern sie größer als die Maximalleistung ist, auf die Maximalleistung abgesenkt wird, und
    - zum Verändern der Drehzahl zur Zieldrehzahl ($n_Z$) der Blattwinkel mittels der Blattwinkelvorsteuerung (212) zum Zielblattwinkel ($\alpha_Z$) hin verstellt wird, und/oder

- im Falle einer Drehzahlanforderung als Abregelungsanforderung
    - die Zieldrehzahl ($n_Z$) vorgegeben wird,
    - die Anlagenleistung ($P_G$) in Abhängigkeit von der vorgegebenen Zieldrehzahl ($n_Z$) eingestellt wird, und
    - zum Verändern der Drehzahl zur Zieldrehzahl ($n_Z$) der Blattwinkel mittels der Blattwinkelvorsteuerung (212) zum Zielblattwinkel ($\alpha_Z$) hin verstellt wird, wobei insbesondere

- zum Abbremsen des Rotors (106) die Anlagenleistung ($P_G$), oder ein Generatormoment vorgegeben werden, um zusammen mit einer vorgesteuerten aerodynamischen Leistung ($P_{ae}$) ein möglichst starkes Abbremsen des Rotors (106) zu erreichen.

5. Verfahren nach einem der vorstehenden Ansprüche, **dadurch gekennzeichnet, dass**

- die Blattwinkelvorsteuerung (212) den Blattwinkel oder die Verstellrate als Stellgröße vorgibt, und insbesondere
- die Drehzahlregelung (201) einen Blattwinkel oder eine Verstellrate des Blattwinkels in Abhängigkeit von einer Drehzahlabweichung als Stellgröße vorgibt und
- die Drehzahlregelung (201), zumindest zeitweise, der Blattwinkelvorsteuerung (212) untergeordnet ist, sodass die von der Drehzahlregelung (201) vorgegebene Stellgröße zumindest zeitweise nicht oder nur mit einer Gewichtung von unter 50% an die Blattwinkelsteuerung (210) weitergegeben wird, wobei insbesondere vorgeschlagen wird, dass
- von der Drehzahlregelung (201) und der Blattwinkelvorsteuerung (212) jeweils diejenige aktiv ist, die betragsmäßig den größeren einzustellenden Blattwinkel bzw. die größere einzustellende Verstellrate als Stellgröße ausgibt, und/oder dass
- der Drehzahlregelung (201) ein Drehzahlverlauf vorgegeben wird, der insbesondere modellbasiert vorgegeben wird.

6. Verfahren nach einem der vorstehenden Ansprüche, **dadurch gekennzeichnet, dass**

- zum Verändern der Drehzahl eine aerodynamische Bremsgröße vorgegeben wird, wobei die aerodynamische Bremsgröße als Rotorbeschleunigung oder aerodynamische Leistung ($P_{ae}$) vorgesehen ist, wobei die aerodynamische Leistung ($P_{ae}$) eine Leistung bezeichnet, die der Rotor (106) aus dem Wind erzeugt, und
- in Abhängigkeit von der vorgegebenen Bremsgröße der Vorsteuerblattwinkel ($\alpha_V$) bestimmt wird, um die vorgegebene Bremsgröße zu erreichen, wobei insbesondere
- abhängig von Drehzahl, Windgeschwindigkeit ($V_W$) und vorgegebener aerodynamischer Bremsgröße als Vorsteuerblattwinkel ($\alpha_V$) ein Blattwinkel bestimmt wird, der zu der vorgegebenen aerodynamischen Bremsgröße führt.

7. Verfahren nach einem der vorstehenden Ansprüche, **dadurch gekennzeichnet, dass**

- das Vorgeben des Vorsteuerblattwinkels ($\alpha_V$) kontinuierlich, oder zumindest in zeitlich kurzen Schritten unter einer Sekunde, wiederholt wird, und/oder
- zum Vorgeben des Vorsteuerblattwinkels ($\alpha_V$), insbesondere aus einer bzw. der aerodynamischen Bremsgröße,
- ein einzustellender Leistungsbeiwert ($C_P$) bestimmt wird, und abhängig von dem Leistungsbeiwert ($C_P$) der Vorsteuerblattwinkel ($\alpha_V$) bestimmt wird, um den Leistungsbeiwert ($C_P$) zu erreichen.

8. Verfahren nach einem der vorstehenden Ansprüche, **dadurch gekennzeichnet, dass**

- zum Vorgeben einer bzw. der aerodynamischen Bremsgröße eine Idealbremsgröße vorgegeben wird, und
- die Idealbremsgröße mittels eines Filters gefiltert wird, um die aerodynamische Bremsgröße zu erhalten, wobei
- der Filter aus der vorgegebenen Idealbremsgröße wenigstens eine Eigenschwingfrequenz der Windenergieanlage (100), die insbesondere eine Turmeigenfrequenz ist, filtert, um die aerodynamische Bremsgröße zu erhalten, und
- der Filter insbesondere ein Bandstoppfilter und/oder Notchfilter ist.

9. Verfahren nach einem der vorstehenden Ansprüche, **dadurch gekennzeichnet, dass**

- das Bestimmen des Blattwinkels abhängig von Drehzahl, Windgeschwindigkeit ($V_W$) und vorgegebener aerodynamischer Leistung ($P_{ae}$) modellbasiert und/oder basierend auf vorbestimmten Zusammenhängen erfolgt und/oder

- die Blattwinkelvorsteuerung (212) den Blattwinkel oder die Verstellrate als Stellgröße vorgibt um die aerodynamische Leistung ($P_{ae}$) vorzusteuern, und die Drehzahlregelung (201), zumindest zeitweise, der Blattwinkelvorsteuerung (212) untergeordnet ist, wobei insbesondere vorgeschlagen wird, dass
- von der Drehzahlregelung (201) und der Blattwinkelvorsteuerung (212) jeweils diejenige aktiv ist, die betragsmäßig den größeren einzustellenden Blattwinkel bzw. die größere einzustellende Verstellrate ausgibt.

10. Verfahren nach einem der vorstehenden Ansprüche, **dadurch gekennzeichnet, dass**

- die Drehzahlregelung (201) in Abhängigkeit von einer Drehzahlregelabweichung als Differenz zwischen einer Ist-Drehzahl ($n_i$) und einer Soll-Drehzahl ($n_S$) einen Sollblattwinkel ($\alpha_S$) oder eine Soll-Verstellrate ausgibt, insbesondere an die Blattwinkelsteuerung (210), und
- die Drehzahlregelung (201) während die Blattwinkelvorsteuerung (212) den einzustellenden Blattwinkel bzw. die einzustellende Verstellrate unmittelbar vorgibt, verändert oder ausgesetzt wird.

11. Verfahren nach einem der vorstehenden Ansprüche, **dadurch gekennzeichnet, dass**

- zum Ansteuern des Zielarbeitspunktes der Drehzahlregelung (201) ein zeitlicher Verlauf einer Soll-Drehzahl ($n_S$) vorgegeben wird, und/oder
- zum Ansteuern des Zielarbeitspunktes der Leistungsregelung ein zeitlicher Verlauf einer Soll-Leistung vorgegeben wird, und/oder
- während die Blattwinkelvorsteuerung (212) den einzustellenden Blattwinkel bzw. die einzustellende Verstellrate unmittelbar vorgibt,

- die Drehzahlregelung (201) in ihrer Parametrierung, insbesondere in wenigstens einem Verstärkungsfaktor verändert wird.

12. Verfahren nach einem der vorstehenden Ansprüche, **dadurch gekennzeichnet, dass**

- eine Blattwinkelveränderung vom ersten Blattwinkel zum Zielblattwinkel ($\alpha_Z$) als relative Blattwinkelveränderung von 0% bis 100% beschreibbar ist, wobei 0% dem ersten Blattwinkel und 100% dem Zielblattwinkel ($\alpha_Z$) entspricht, und
- das Verstellen des Blattwinkels mittels der Blattwinkelvorsteuerung (212) vom ersten Blattwinkel zum Zielblattwinkel ($\alpha_Z$) vor Erreichen des Zielblattwinkels ($\alpha_Z$) abgebrochen und/oder von der Drehzahlregelung (201) übernommen wird, wobei insbesondere
- das Verstellen des Blattwinkels mittels der Blattwinkelvorsteuerung (212) wenigstens für 5% bis 90%, insbesondere für 0% bis 95% der Blattwinkelveränderung erfolgt und/oder
- die Drehzahlregelung (201) währenddessen verändert oder deaktiviert.

13. Verfahren nach einem der vorstehenden Ansprüche, **dadurch gekennzeichnet, dass**

- zum Ansteuern des Zielarbeitspunktes eine aerodynamische Bremsleistung ($P_{ae}$) bestimmt wird, mit der der Rotor (106) durch den Wind abgebremst werden soll, und

- der Blattwinkel durch die Blattwinkelvorsteuerung (212) so bestimmt wird, dass der Rotor (106) die aerodynamische Bremsleistung ($P_{ae}$) an den Wind abgibt, wobei insbesondere
- die aerodynamische Bremsleistung ($P_{ae}$) in einem Bereich von 10% bis 120% einer Nennleistung ($P_N$) der Windenergieanlage (100) gewählt wird, insbesondere im Bereich von 50% bis 100% der Nennleistung.

14. Verfahren nach einem der vorstehenden Ansprüche, **dadurch gekennzeichnet, dass**

- zum Bestimmen des Zielarbeitspunktes eine Windgeschwindigkeit ($V_W$) geschätzt wird, basierend auf der Drehzahl, der Leistung und dem ersten Blattwinkel, und/oder
- in dem Zielarbeitspunkt die Drehzahl (n) und/oder die Leistung größer als null ist, und/oder
- eine angestrebte Reduzierungszeit vorgegeben wird innerhalb derer der Zielarbeitspunkt zu erreichen ist, und
- das Vorgeben des zeitlichen Blattwinkelverlaufs in Abhängigkeit von der angestrebten Reduzierungszeit bestimmt wird, insbesondere unter Verwendung eines bzw. des Modells, und/oder dass
- nach Beenden des Verstellens des Blattwinkels mittels der Blattwinkelvorsteuerung (212)
- die Drehzahlregelung (201) die Drehzahl (n) auf eine Solldrehzahl ($n_S$) regelt oder begrenzt.

15. Verfahren nach einem der vorstehenden Ansprüche, **dadurch gekennzeichnet, dass**

- wenn eine Abregelungsanforderung vorliegt
- geprüft wird, ob der Zielarbeitspunkt einen ausreichenden Abstand zum ersten Arbeitspunkt aufweist, und
- das Verstellen des Blattwinkels mittels der Blattwinkelvorsteuerung (212) nur durchgeführt wird, wenn der Abstand des Zielarbeitspunktes ausreichend ist, wobei
- ein ausreichender Abstand vorliegt, wenn der Abstand oberhalb eines vorbestimmbaren Vergleichsabstands liegt, wobei insbesondere
- als Abstand eine Differenz zwischen aktueller Drehzahl und Zieldrehzahl ($n_Z$) betrachtet wird und als ausreichend bewertet wird, wenn er größer als eine vorgebbare Mindestdrehzahldifferenz ist, und/oder.
- als Abstand eine Differenz zwischen aktueller Anlagenleistung ($P_G$) und Zielleistung ($P_Z$) betrachtet wird und als ausreichend bewertet wird, wenn er größer als eine vorgebbare Mindestleistungsdifferenz ist, und/oder
- als Abstand eine Differenz zwischen erstem

Blattwinkel und Zielblattwinkel ($\alpha_Z$) betrachtet wird und als ausreichend bewertet wird, wenn er größer als eine vorgebbare Mindestwinkeldifferenz ist.

16. Verfahren nach einem der vorstehenden Ansprüche, **dadurch gekennzeichnet, dass**

- eine Annäherung eines Flugtieres, insbesondere eines Vogels oder einer Fledermaus, zu einer Drehzahlanforderung als Abregelungsanforderung führt und
- die Zieldrehzahl ($n_Z$) bestimmt wird in Abhängigkeit von einem Kriterium, mehreren oder allen Kriterien aus der Liste aufweisend:

- eine Position des Flugtieres,
- eine Art des Flugtieres,
- eine Bewegungsgeschwindigkeit des Flugtieres, und
- eine Bewegungsrichtung des Flugtieres und/oder

- ein Verhalten des Flugtieres weiter beobachtet wird und in Abhängigkeit von dem beobachteten Verhalten des Flugtieres eine neue Zieldrehzahl ($n_Z$) vorgegeben wird.

17. Windenergieanlage (100), angeschlossen an ein elektrisches Versorgungsnetz, die einen Rotor (106) mit in ihrem Blattwinkel verstellbaren Rotorblättern (108) aufweist, mit einer variablen Drehzahl betreibbar ist und zum Erzeugen einer Anlagenleistung ($P_G$) aus Wind vorbereitet ist, wobei

- zum Verstellen der Blattwinkel eine Blattwinkelsteuerung (210) vorgesehen ist,
- zum Regeln oder Begrenzen der Drehzahl eine Drehzahlregelung (201) vorgesehen ist,
- zum Begrenzen der Anlagenleistung ($P_G$) eine Leistungsregelung vorgesehen ist,
- die Windenergieanlage (100) in einem vorgebbaren Arbeitspunkt betreibbar ist, wobei der Arbeitspunkt wenigstens durch die Drehzahl und die Anlagenleistung ($P_G$) gekennzeichnet ist und
- die Windenergieanlage (100) dazu vorbereitet ist, ein Verfahren gemäß einem der vorstehenden Ansprüche auszuführen, wobei
- die Windenergieanlage (100) dazu eine Anlagensteuerung (103) aufweist, auf der ein solches Verfahren implementiert ist.

**Claims**

1. A method for controlling a wind power installation (100) which is connected to an electrical supply network and which has a rotor (106) with rotor blades (108) which are adjustable in terms of their blade angle, is able to be operated at a variable speed and is prepared for generating an installation power ($P_G$) from wind, wherein

- a blade angle control (210) is provided for adjusting the blade angles,
- a closed-loop speed control (201) is provided for closed-loop control of the speed,
- a closed-loop power control is provided for limiting the installation power ($P_G$), and
- the wind power installation (100) is able to be operated at an operating point which can be specified, wherein the operating point is characterized at least by the speed and the installation power ($P_G$),

comprising the steps of

- operating the wind power installation (100) at a first operating point with a first blade angle,
- checking for a curtailment request, where a reduction in the speed and/or installation power ($P_G$) is requested, and
- if there is a curtailment request,

  - determining a new operating point as the target operating point depending on the curtailment request, wherein the target operating point is **characterized by** a target speed ($n_Z$) and a target installation power ($P_Z$), and
  - determining a setpoint blade angle as the target blade angle ($\alpha_Z$) for the target operating point, wherein
  - in order to change the blade angle to the target blade angle ($\alpha_Z$), a feedforward control blade angle, or a feedforward adjustment rate describing an adjustment rate of the blade angle, is specified via a feedforward control blade angle control (212), wherein
  - the feedforward control blade angle control (212) gives the feedforward control blade angle or the feedforward control adjustment rate directly to the blade angle control (210) for implementation.

2. The method as claimed in claim 1, **characterized in that**

   - the feedforward control process specifies the feedforward control blade angle or the feedforward control adjustment rate

     - independently of a speed deviation as a deviation of a recorded speed from a specified speed, and/or
- independently of the recorded speed and independently of the recorded installation power ($P_G$) and/or

- independently of the closed-loop speed control (201) and independently of the closed-loop power control process, and in particular
- the change in the blade angle from the first blade angle to the target blade angle ($\alpha_Z$) is specified completely or predominantly by the feedforward control process.

3. The method as claimed in claim 1 or 2, **characterized in that**

   - the target blade angle ($\alpha_Z$) is defined as an ideal blade angle which, under steady-state conditions at the target operating point, leads to the target speed ($n_Z$) and target power ($P_Z$), and/or
   - the feedforward control process specifies a fixed blade angle or a fixedly specified temporal blade angle profile as the feedforward control blade angle or a fixed adjustment rate as the feedforward adjustment rate, and/or
   - the feedforward control blade angle or the feedforward control adjustment rate is determined using a model which reproduces the behavior of the wind power installation (100), and/or
   - a target tip-speed ratio is provided for the target operating point as the tip-speed ratio ($\lambda$)) characterizing the target operating point, and
   - the target blade angle ($\alpha_Z$) is determined in such a way that the target tip-speed ratio is set at the target operating point under steady-state conditions.

4. The method as claimed in any of the preceding claims, **characterized in that**

   - a curtailment request is selected from the list comprising:

     - a speed request as a request for a speed reduction, in particular for the protection of an approaching animal, in particular a bird or a bat, wherein the speed request specifies, in particular, the level of a specific target speed ($n_Z$), and
     - a power request as a request for a reduction of the installation power ($P_G$), in particular for supporting the electrical supply network, wherein the power request specifies, in particular, the level of a specific target power ($P_Z$), and/or that

   - in the case of a power request as a curtailment request,

- a maximum power is specified for the installation power ($P_G$),
- the current installation power ($P_G$), if it is greater than the maximum power, is reduced to the maximum power, and,
- in order to change the speed to the target speed ($n_Z$), the blade angle is adjusted to the target blade angle ($\alpha_Z$) by means of the blade angle feedforward control process (212), and/or,

- in the case of a speed request as a curtailment request,
- the target speed ($n_Z$) is specified,
- the installation power ($P_G$) is set depending on the specified target speed ($n_Z$), and,
- in order to change the speed to the target speed ($n_Z$), the blade angle is adjusted to the target blade angle ($\alpha_Z$) by means of the blade angle feedforward control process (212), wherein, in particular,

- in order to decelerate the rotor (106), the installation power ($P_G$) or a generator torque are specified in order to achieve the greatest possible deceleration of the rotor (106), achieved in combination with an aerodynamic power ($P_{ae}$) which has been subjected to a feedforward control.

5. The method as claimed in any of the preceding claims, **characterized in that**

- the blade angle feedforward control process (212) specifies the blade angle or the adjustment rate as a manipulated variable, and in particular
- the closed-loop speed control (201) specifies a blade angle or an adjustment rate of the blade angle as a manipulated variable depending on a speed deviation, and
- the closed-loop speed control (201), at least temporarily, is subordinate to the blade angle feedforward control process (212) such that the manipulated variable specified by the closed-loop speed control (201) is at least temporarily not transmitted to the blade angle control (210) or only with a weighting of less than 50%, wherein it is proposed, in particular, that
- of the closed-loop speed control (201) and the blade angle feedforward control process (212), the one which outputs the larger blade angle to be set or the larger adjustment rate to be set as the manipulated variable is active, and/or that
- the closed-loop speed control (201) is given a speed profile which is specified, in particular, based on a model.

6. The method as claimed in any of the preceding claims, **characterized in that**

- an aerodynamic braking variable is specified in order to change the speed, wherein the aerodynamic braking variable is provided as a rotor acceleration or an aerodynamic power ($P_{ae}$), wherein the aerodynamic power ($P_{ae}$) is a power generated by the rotor (106) from the wind, and
- the feedforward control blade angle ($\alpha_V$) is determined depending on the specified braking variable in order to achieve the specified braking variable, wherein, in particular,
- a blade angle which results in the specified aerodynamic braking variable is determined as the feedforward control blade angle ($\alpha_V$) depending on the speed, wind speed ($V_W$) and specified aerodynamic braking variable.

7. The method as claimed in any of the preceding claims, **characterized in that**

- the specification of the feedforward control blade angle ($\alpha_V$) is repeated continuously, or at least in short-term steps of less than one second, and/or,
- in order to specify the feedforward control blade angle ($\alpha_V$), in particular from a or the aerodynamic braking variable,
- a power coefficient ($C_P$) to be set is determined and the feedforward control blade angle ($\alpha_V$) is determined depending on the power coefficient ($C_P$) in order to achieve the power coefficient ($C_P$).

8. The method as claimed in any of the preceding claims, **characterized in that**

- an ideal braking variable is specified in order to specify a or the aerodynamic braking variable, and
- the ideal braking variable is filtered by means of a filter in order to obtain the aerodynamic braking variable, wherein,
- in order to obtain the aerodynamic braking variable, the filter filters from the specified ideal braking variable at least one natural oscillation frequency of the wind power installation (100), which is in particular a natural tower frequency, and
- the filter is, in particular, a band-stop filter and/or a notch filter.

9. The method as claimed in any of the preceding claims, **characterized in that**

- the blade angle is determined depending on speed, wind speed ($V_W$) and specified aerodynamic power ($P_{ae}$) based on a model and/or based on predetermined relationships and/or

- the blade angle feedforward control process (212) specifies the blade angle or the adjustment rate as a manipulated variable in order to perform feedforward control of the aerodynamic power ($P_{ae}$) and the closed-loop speed control (201), at least temporarily, is subordinate to the blade angle feedforward control process (212), wherein it is proposed, in particular, that
- of the closed-loop speed control (201) and the blade angle feedforward control process (212), the one which outputs the larger blade angle to be set or the larger adjustment rate to be set is active.

10. The method as claimed in any of the preceding claims, **characterized in that**

- the closed-loop speed control (201) outputs a setpoint blade angle ($\alpha_S$) or a setpoint adjustment rate as the difference between an actual speed ($n_i$) and a setpoint speed ($n_S$) depending on a closed-loop speed control deviation, in particular to the blade angle control (210), and
- the closed-loop speed control (201) is changed or suspended, while the blade angle feedforward control process (212) directly specifies the blade angle to be set or the adjustment rate to be set.

11. The method as claimed in any of the preceding claims, **characterized in that**

- a time profile of a setpoint speed ($n_S$) is specified in order to control the target operating point of the closed-loop speed control (201), and/or
- a time profile of a setpoint power is specified in order to control the target operating point of the closed-loop power control, and/or
- while the blade angle feedforward control process (212) directly specifies the blade angle to be set or the adjustment rate to be set,

- the closed-loop speed control (201) is modified in terms of its parameterization, in particular in terms of at least one gain factor.

12. The method as claimed in any of the preceding claims, **characterized in that**

- a change in blade angle from the first blade angle to the target blade angle ($\alpha_Z$) can be described as a relative blade angle change of from 0% to 100%, wherein 0% corresponds to the first blade angle and 100% corresponds to the target blade angle ($\alpha_Z$), and
- the adjustment of the blade angle by means of the blade angle feedforward control process (212) from the first blade angle to the target blade angle ($\alpha_Z$) is interrupted before the target blade angle ($\alpha_Z$) is reached and/or is taken over by the closed-loop speed control (201), wherein, in particular,
- the blade angle is adjusted by means of the blade angle feedforward control process (212) for at least 5% to 90%, in particular for 0% to 95%, of the blade angle change and/or
- the closed-loop speed control (201) is changed or deactivated during this time.

13. The method as claimed in any of the preceding claims, **characterized in that**

- in order to control the target operating point, an aerodynamic braking power ($P_{ae}$) with which the rotor (106) is to be braked by the wind is determined, and
- the blade angle is determined by the blade angle feedforward control process (212) in such a way that the rotor (106) outputs the aerodynamic braking power ($P_{ae}$) to the wind, wherein, in particular,
- the aerodynamic braking power ($P_{ae}$) is selected in a range of from 10% to 120% of a rated power ($P_N$) of the wind power installation (100), in particular in a range of from 50% to 100% of the rated power.

14. The method as claimed in any of the preceding claims, **characterized in that**

- in order to determine the target operating point, a wind speed ($V_W$) is estimated based on the speed, the power and the first blade angle, and/or
- the speed ($n$) and/or the power at the target operating point is greater than zero, and/or
- a desired reduction time within which the target operating point is to be reached is specified, and
- the specification of the temporal blade angle profile is determined depending on the desired reduction time, in particular by using a or the model, and/or
- after the blade angle adjustment has been completed using the blade angle feedforward control process (212),
- the closed-loop speed control (201) controls or limits the speed ($n$) to a setpoint speed ($n_S$).

**15.** The method as claimed in any of the preceding claims, **characterized in that**

- if there is a curtailment request,
- there is a check to determine whether the target operating point is at a sufficient distance from the first operating point, and
- the blade angle is adjusted by means of the blade angle feedforward control process (212) only if the distance of the target operating point is sufficient, wherein
- a sufficient distance is present if the distance is above a predeterminable comparison distance, wherein, in particular,
- a difference between the current speed and the target speed ($n_Z$) is considered as the distance and is considered sufficient if it is greater than a minimum speed difference that can be specified, and/or
- a difference between the current installation power ($P_G$) and the target power ($P_Z$) is considered as the distance and is considered sufficient if it is greater than a minimum power difference that can be specified, and/or
- a difference between the first blade angle and the target blade angle ($\alpha_Z$) is considered as the distance and is considered sufficient if it is greater than a minimum angle difference that can be specified.

**16.** The method as claimed in any of the preceding claims, **characterized in that**

- an approach of a flying animal, in particular a bird or a bat, leads to a speed request as a curtailment request and
- the target speed ($n_Z$) is determined depending on one criterion, a plurality or all of the criteria from the list comprising:

- a position of the flying animal,
- a species of the flying animal,
- a speed of movement of the flying animal, and
- a direction of movement of the flying animal and/or

- a behavior of the flying animal is observed further and a new target speed ($n_Z$) is specified depending on the observed behavior of the flying animal.

**17.** A wind power installation (100) which is connected to an electrical supply network and which has a rotor (106) with rotor blades (108) which are adjustable in terms of their blade angle, is able to be operated at a variable speed and is prepared for generating an installation power ($P_G$) from wind, wherein

- a blade angle control (210) is provided for adjusting the blade angles,
- a closed-loop speed control (201) is provided for controlling or limiting the speed,
- a closed-loop power control is provided for limiting the installation power ($P_G$),
- the wind power installation (100) is able to be operated at a predeterminable operating point, wherein the operating point is characterized at least by the speed and the installation power ($P_G$), and
- the wind power installation (100) is prepared to carry out a method as claimed in any one of the preceding claims, wherein
- the wind power installation (100) has an installation control system (103) in which such a method is implemented.

**Revendications**

**1.** Procédé de commande d'une éolienne (100) connectée à un réseau d'alimentation électrique, qui présente un rotor (106) avec des pales de rotor (108) ajustables dans leur angle de pale, qui peut fonctionner à une vitesse de rotation variable et qui est préparée pour générer une puissance d'éolienne ($P_G$) à partir du vent, dans lequel

- une commande d'angle de pale (210) est prévue pour ajuster les angles de pale,
- une régulation de vitesse de rotation (201) est prévue pour réguler la vitesse de rotation,
- une régulation de puissance est prévue pour limiter la puissance de l'installation ($P_G$), et
- l'éolienne (100) peut fonctionner à un point de fonctionnement pouvant être prédéfini, dans lequel le point de fonctionnement est caractérisé au moins par la vitesse de rotation et la puissance de l'installation ($P_G$) comprenant les étapes
- de fonctionnement de l'éolienne (100) à un premier point de travail avec un premier angle de pale,
- de vérification d'une demande de régulation dans laquelle une réduction de la vitesse de rotation et/ou de la puissance de l'installation ($P_G$) est demandée, et
- lorsqu'une demande de régulation est présente,
- de détermination d'un nouveau point de fonctionnement comme point de fonctionnement cible en fonction de la demande de régulation, dans lequel le point de fonctionnement cible est **caractérisé par** une vitesse de rotation cible ($n_Z$) et une puissance d'installation cible ($P_Z$), et
- de détermination d'un angle de pale de consigne comme angle de pale cible ($\alpha_Z$) pour le point de fonctionnement cible, dans lequel

- pour modifier l'angle de pale par rapport à l'angle de pale cible ($\alpha_Z$), un angle de pale pilote, ou un taux d'ajustement pilote décrivant un taux d'ajustement de l'angle de pale, est prédéfini par l'intermédiaire d'une commande pilote d'angle de pale (212), dans lequel

- la commande pilote d'angle de pale (212) transmet l'angle de pale pilote ou la vitesse d'ajustement pilote directement à la commande d'angle de pale (210) pour mise en œuvre.

2.  Procédé selon la revendication 1, **caractérisé en ce que**

    - le système de commande pilote prédéfinit l'angle de pale pilote ou le taux d'ajustement pilote

    - indépendamment d'un écart de vitesse de rotation en tant qu'un écart d'une vitesse de rotation détectée par rapport à une vitesse de rotation prédéfinie, et/ou

    - indépendamment de la vitesse de rotation détectée et indépendamment de la puissance de l'installation détectée ($P_G$) et/ou

    - indépendamment de la régulation de vitesse de rotation (201) et indépendamment de la régulation de puissance, et en particulier

    - la modification de l'angle de pale du premier angle de pale à l'angle de pale cible ($\alpha_Z$) est prédéfinie entièrement ou principalement par le système de commande pilote.

3.  Procédé selon la revendication 1 ou 2, **caractérisé en ce que**

    - un angle de pale idéal est déterminé en tant qu'angle de pale cible ($\alpha_Z$), qui conduit à la vitesse de rotation cible ($n_Z$) et à la puissance cible ($P_Z$) dans des conditions stationnaires sur le point de travail cible, et/ou

    - le système de commande pilote prédéfinit un angle de pale fixe ou une courbe d'angle de pale fixe prédéfinie dans le temps comme l'angle de pale pilote ou un taux d'ajustement fixe comme le taux d'ajustement pilote, et/ou

    - l'angle de pale pilote ou le taux d'ajustement pilote est déterminé(e) à l'aide d'un modèle qui représente un comportement de l'éolienne (100), et/ou que

    - un nombre de courses rapides cible est prévu pour le point de fonctionnement cible en tant que nombre de courses rapides ($\lambda$) caractérisant le point de fonctionnement cible, et

    - l'angle de pale cible ($\alpha_Z$) est déterminé de telle sorte que le nombre de courses rapides cible se règle sur le point de fonctionnement cible dans des conditions stationnaires.

4.  Procédé selon l'une quelconque des revendications précédentes, **caractérisé en ce que**

    - une demande de régulation est sélectionnée dans la liste présentant :
    - une demande de vitesse de rotation en tant que demande d'abaissement de vitesse de rotation, en particulier pour protéger un animal s'approchant, en particulier un oiseau ou une chauve-souris, dans lequel la demande de vitesse de rotation prédéfinit en particulier une vitesse de rotation cible concrète ($n_Z$) selon la hauteur, et
    - une demande de puissance en tant que demande d'abaissement de la puissance de l'installation ($P_G$), en particulier pour soutenir le réseau d'alimentation électrique, dans lequel la demande de puissance prédéfinit en particulier une puissance cible concrète ($P_Z$) selon la hauteur, et/ou que
    - en cas de demande de puissance en tant que demande de régulation
    - une puissance maximale est prédéfinie pour la puissance de l'installation ($P_G$),
    - la puissance actuelle de l'installation ($P_G$), si elle est supérieure à la puissance maximale, est abaissée à la puissance maximale, et
    - pour modifier la vitesse de rotation par rapport à la vitesse de rotation cible ($n_Z$), l'angle de pale est ajusté vers l'angle de pale cible ($\alpha_Z$) au moyen de la commande pilote d'angle de pale (212), et/ou
    - en cas de demande de vitesse de rotation en tant que demande de régulation
    - la vitesse de rotation cible ($n_Z$) est prédéfinie,
    - la puissance de l'installation ($P_G$) est réglée en fonction de la vitesse de rotation cible ($n_Z$) prédéfinie, et
    - pour modifier la vitesse de rotation vers la vitesse de rotation cible ($n_Z$), l'angle de pale est ajusté vers l'angle de pale cible ($\alpha_Z$) au moyen de la commande pilote d'angle de pale (212), dans lequel en particulier
    - pour freiner le rotor (106), la puissance de l'installation ($P_G$), ou un couple de générateur sont prédéfinis pour obtenir, conjointement avec une puissance aérodynamique précommandée ($P_{ae}$), un freinage le plus important possible du rotor (106).

5.  Procédé selon l'une quelconque des revendications précédentes, **caractérisé en ce que**

    - la commande pilote d'angle de pale (212) prédéfinit l'angle de pale ou le taux d'ajustement comme grandeur de réglage, et en particulier
    - la régulation de vitesse de rotation (201) prédéfinit un angle de pale ou un taux d'ajustement de l'angle de pale en fonction d'un écart de vitesse de rotation comme grandeur de réglage et

- la régulation de vitesse de rotation (201) est au moins temporairement subordonnée à la commande pilote d'angle de pale (212) si bien que la grandeur de réglage prédéfinie par la régulation de vitesse de rotation (201) n'est pas transmise au moins temporairement ou seulement avec une pondération inférieure à 50 % au système de commande d'angle de pale (210), dans lequel il est notamment proposé que

- parmi la régulation de vitesse de rotation (201) et la commande pilote de l'angle de pale (212), celle qui délivre en quantité l'angle de pale à régler plus grand ou le taux d'ajustement à régler plus grand que la grandeur de réglage est respectivement active, et/ou que

- une courbe de vitesse de rotation est prédéfinie à la régulation de vitesse de rotation (201), qui est notamment prédéfinie sur la base d'un modèle.

6. Procédé selon l'une quelconque des revendications précédentes, **caractérisé en ce que**

   - une grandeur de freinage aérodynamique est prédéfinie pour modifier la vitesse de rotation, dans lequel la grandeur de freinage aérodynamique est prévue comme accélération du rotor ou puissance aérodynamique ($P_{ae}$), dans lequel la puissance aérodynamique ($P_{ae}$) désigne une puissance qui est générée par le rotor (106) à partir du vent, et

   - en fonction de la grandeur de freinage prédéfinie, l'angle de pale pilote ($\alpha_V$) est déterminé pour atteindre la grandeur de freinage prédéfinie, dans lequel en particulier

   - en fonction de la vitesse de rotation, de la vitesse du vent ($V_W$) et de la grandeur de freinage aérodynamique prédéfinie, un angle de pale est déterminé en tant qu'angle de pale pilote ($\alpha_V$) qui conduit à la grandeur de freinage aérodynamique prédéfinie.

7. Procédé selon l'une quelconque des revendications précédentes, **caractérisé en ce que**

   - la prédéfinition de l'angle de pale pilote ($\alpha_V$) est répétée en continu, ou au moins par étapes de courte durée inférieures à une seconde, et/ou

   - pour prédéfinir l'angle de pale pilote ($\alpha_V$), en particulier à partir d'une ou de la grandeur de freinage aérodynamique,

   - un coefficient de puissance ($C_P$) à régler est déterminé et, en fonction du coefficient de puissance ($C_P$), l'angle de pale pilote ($\alpha_V$) est déterminé pour atteindre le coefficient de puissance ($C_P$).

8. Procédé selon l'une quelconque des revendications précédentes, **caractérisé en ce que**

   - une grandeur de freinage idéale est prédéfinie pour la prédéfinition d'une ou de la grandeur de freinage aérodynamique, et

   - la grandeur de freinage idéale est filtrée au moyen d'un filtre pour obtenir la grandeur de freinage aérodynamique, dans lequel

   - le filtre filtre, à partir de la grandeur de freinage idéale prédéfinie, au moins une fréquence propre d'oscillation de l'éolienne (100), qui est en particulier une fréquence propre de tour, pour obtenir la grandeur de freinage aérodynamique, et

   - le filtre est en particulier un filtre coupe-bande et/ou filtre notch.

9. Procédé selon l'une quelconque des revendications précédentes, **caractérisé en ce que**

   - la détermination de l'angle de pale en fonction de la vitesse de rotation, de la vitesse du vent ($V_W$) et de la puissance aérodynamique ($P_{ae}$) prédéfinie est basée sur un modèle et/ou sur des relations prédéterminées et/ou

   - la commande pilote d'angle de pale (212) prédéfinit l'angle de pale ou le taux d'ajustement comme grandeur de réglage pour précommander la puissance aérodynamique ($P_{ae}$) et la régulation de vitesse de rotation (201) est, au moins temporairement, subordonnée à la commande pilote d'angle de pale (212), dans lequel il est notamment proposé que

   - parmi la régulation de vitesse de rotation (201) et de la commande pilote d'angle de pale (212) est respectivement active celle qui délivre en quantité le plus grand angle de pale à régler ou le plus grand taux d'ajustement à régler.

10. Procédé selon l'une quelconque des revendications précédentes, **caractérisé en ce que**

   - la régulation de vitesse de rotation (201) délivre, en fonction d'un écart de régulation de vitesse de rotation, en tant que différence entre une vitesse de rotation réelle ($n_i$) et une vitesse de rotation de consigne ($n_S$), un angle de pale de consigne ($\alpha_S$) ou un taux d'ajustement de consigne, en particulier à la commande d'angle de pale (210), et

   - la régulation de vitesse de rotation (201), pendant que la commande pilote d'angle de pale (212) prédéfinit directement l'angle de pale à régler ou le taux d'ajustement à régler, est modifiée ou est suspendue.

**11.** Procédé selon l'une quelconque des revendications précédentes, **caractérisé en ce que**

- pour piloter le point de fonctionnement cible de la régulation de vitesse de rotation (201), une évolution temporelle d'une vitesse de rotation de consigne ($n_S$) est prédéfinie, et/ou
- pour piloter le point de fonctionnement cible de la régulation de puissance, une évolution temporelle d'une puissance de consigne est prédéfinie, et/ou
- pendant que la commande pilote d'angle de pale (212) prédéfinit directement l'angle de pale à régler ou le taux d'ajustement à régler,
- la régulation de vitesse de rotation (201) est modifiée dans son paramétrage, en particulier dans au moins un facteur d'amplification.

**12.** Procédé selon l'une quelconque des revendications précédentes, **caractérisé en ce que**

- une modification de l'angle de pale du premier angle de pale à l'angle de pale cible ($\alpha_Z$) peut être décrite comme une modification relative de l'angle de pale de 0 % à 100 %, dans lequel 0 % correspond au premier angle de pale et 100 % à l'angle de pale cible ($\alpha_Z$), et
- l'ajustement de l'angle de pale au moyen de la commande pilote d'angle de pale (212) du premier angle de pale à l'angle de pale cible ($\alpha_Z$) est interrompu avant que l'angle de pale cible ($\alpha_Z$) ne soit atteint et/ou pris en charge par la régulation de vitesse de rotation (201), dans lequel en particulier
- l'ajustement de l'angle de pale au moyen de la commande pilote d'angle de pale (212) s'effectue au moins pour 5 % à 90 %, en particulier pour 0 % à 95 % de la modification de l'angle de pale et/ou
- pendant ce temps, la régulation de vitesse de rotation (201) est modifiée ou désactivée.

**13.** Procédé selon l'une quelconque des revendications précédentes, **caractérisé en ce que**

- pour commander le point de fonctionnement cible, une puissance de freinage aérodynamique ($P_{ae}$) est déterminée avec laquelle le rotor (106) doit être freiné par le vent, et
- l'angle de pale est déterminé par la commande pilote d'angle de pale (212) de telle sorte que le rotor (106) transmet la puissance de freinage aérodynamique ($P_{ae}$) au vent, dans lequel notamment
- la puissance de freinage aérodynamique ($P_{ae}$) est choisie dans une plage de 10 % à 120 % d'une puissance nominale ($P_N$) de l'éolienne (100), notamment dans la plage de 50 % à 100 % de la puissance nominale.

**14.** Procédé selon l'une quelconque des revendications précédentes, **caractérisé en ce que**

- pour déterminer le point de fonctionnement cible, une vitesse du vent ($V_W$) est estimée sur la base de la vitesse de rotation, de la puissance et du premier angle de pale, et/ou
- dans le point de fonctionnement cible, la vitesse de rotation (n) et/ou la puissance sont supérieures à zéro, et/ou
- un temps de réduction visé est prédéfini, dans lequel le point de fonctionnement cible doit être atteint, et
- la prédéfinition de l'évolution temporelle de l'angle de pale est déterminée en fonction du temps de réduction visé, notamment en utilisant un ou le modèle, et/ou que
- après la fin de l'ajustement de l'angle de pale à l'aide de la commande pilote d'angle de pale (212)
- la régulation de vitesse de rotation (201) régule ou limite la vitesse de rotation (n) à une vitesse de rotation de consigne (ns).

**15.** Procédé selon l'une quelconque des revendications précédentes, **caractérisé en ce que**

- lorsqu'une demande de régulation est présente
- on vérifie si le point de fonctionnement cible présente une distance suffisante par rapport au premier point de fonctionnement, et
- l'ajustement de l'angle de pale au moyen de la commande pilote d'angle de pale (212) n'est effectué que si la distance du point de travail cible est suffisante, dans lequel
- il existe une distance suffisante lorsque la distance est supérieure à une distance de comparaison prédéterminable, dans lequel en particulier
- une différence entre la vitesse de rotation actuelle et la vitesse de rotation cible ($n_Z$) est considérée comme distance et est évaluée comme suffisante si elle est supérieure à une différence de vitesse de rotation minimale prédéterminable, et/ou.
- une différence entre la puissance actuelle de l'installation ($P_G$) et la puissance cible ($P_Z$) est considérée comme la distance et est considérée comme suffisante si elle est supérieure à une différence de puissance minimale pouvant être prédéfinie, et/ou
- une différence entre le premier angle de pale et l'angle de pale cible ($\alpha_Z$) est considérée comme distance et est considérée comme suffisante si elle est supérieure à une différence d'angle minimale pouvant être prédéfinie.

16. Procédé selon l'une quelconque des revendications précédentes, **caractérisé en ce que**

- l'approche d'un animal volant, en particulier d'un oiseau ou d'une chauve-souris, entraîne une demande de vitesse de rotation en tant que demande de régulation et
- la vitesse de rotation cible ($n_Z$) est déterminée en fonction d'un critère, de plusieurs ou de tous les critères issus de la liste présentant :
- une position de l'animal volant,
- une espèce de l'animal volant,
- une vitesse de déplacement de l'animal volant, et
- une direction de déplacement de l'animal volant et/ou
- un comportement de l'animal volant continue d'être observé et qu'une nouvelle vitesse de rotation cible ($n_Z$) est prédéfinie en fonction du comportement observé de l'animal volant.

17. Éolienne (100) connectée à un réseau d'alimentation électrique, qui présente un rotor (106) avec des pales de rotor (108) ajustables dans leur angle de pale, qui peut fonctionner à une vitesse de rotation variable et qui est préparée pour produire une puissance d'installation ($P_G$) à partir du vent, dans laquelle

- une commande d'angle de pale (210) est prévue pour ajuster l'angle de pale,
- une régulation de vitesse de rotation (201) est prévue pour réguler ou limiter la vitesse de rotation,
- une régulation de puissance est prévue pour limiter la puissance de l'installation ($P_G$),
- l'éolienne (100) peut fonctionner à un point de fonctionnement prédéfini, dans laquelle le point de fonctionnement est caractérisé au moins par la vitesse de rotation et la puissance de l'installation ($P_G$) et
- l'éolienne (100) est préparée pour exécuter un procédé selon l'une quelconque des revendications précédentes, dans lequel
- l'éolienne (100) présente pour cela une commande d'installation (103) sur laquelle un tel procédé est mis en œuvre.

Fig. 1

Fig. 2

Fig. 3

Fig. 4

$$\left[P_{ae} = P_{el} + J \cdot \frac{dn}{dt} \cdot n\right]$$

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019105296 A1

- US 2010283247 A1

**In der Beschreibung aufgeführte Nicht-Patentliteratur**

- **ANDREAS SØNDERGAARD PEDERSEN et al.** *Safe Operation and Emergency Shutdown of Wind Turbines*, 31 May 2012